# EUROPEAN PATENT APPLICATION

(11) **EP 1 750 221 A1**
(43) Date of publication of application: **07.02.2007**
(21) Application number: 06014663.6
(22) Date of filing: 14.07.2006
(51) Int. Cl.: G06Q 10/00

(54) **System, method, and computer program to predict the likelihood, the extent, and the time of an event or change occurrence using a combination of cognitive causal models with reasoning and text processing for knowledge driven decision support**

(30) Priority: 14.07.2005 US 699109 P; 06.09.2005 US 220213
(71) Applicant: The Boeing Company, Chicago, IL 60606-1596 (US)
(72) Inventor: Kipersztok, Oscar, Redmond, Washington 98052 (US)
(74) Representative: Lindner, Michael

(57) **Abstract**

Provided are systems, methods, and computer programs for predicting the likelihood, the extent, and/or the time of an event or change of occurrence using a combination of cognitive causal models with reasoning and text processing for knowledge driven decision support. Additional information may be required for particular queries, such as to predict the extent or time of events and change occurrences. An example knowledge driven decision support system for the prediction of information may include a domain model defining at least two domain concepts and at least one causal relationship between the domain concepts and a reasoning tool for employing the domain model by using at least two of the domain concepts and at least one of the causal relationships of the domain concepts to analyze at least one document for determining a result representing the prediction of an event occurrence, wherein at least one of the causal relationships being used is between two of the domain concepts being used.

## Description

### CROSS-REFERENCE TO RELATED APPLICATIONS

This application claims priority to and the benefit of the filing date of U.S. Patent Application 60/699,109, entitled "System, Method, and Computer Program to Predict the Likelihood, the Extent, and the Time of an Event or Change Occurrence Using a Combination of Cognitive Causal Models with Reasoning and Text Processing for Knowledge Driven Decision Support," filed July 14, 2005, the contents of which are incorporated by reference. The contents of U.S. Patent Application 60/549,823, entitled "System, Method, and Computer Program Product for Combination of Cognitive Causal Models with Reasoning and Text Processing for Knowledge Driven Decision Support," filed March 3, 2004, and U.S. Patent Application 11/070,452, entitled "System, Method, and Computer Program Product for Combination of Cognitive Causal Models With Reasoning and Text Processing for Knowledge Driven Decision Support," filed March 2, 2005, are incorporated by reference in their entireties.

### FIELD OF THE INVENTION

The present invention relates generally to decision support systems and methods, and, more particularly, to systems, methods, and computer programs for predicting the likelihood, the extent, and/or the time of an event or change of occurrence using a combination of cognitive causal models with reasoning and text processing for knowledge driven decision support.

### BACKGROUND

Information has quickly become voluminous over the past half century with improved technologies to produce and store increased amounts of information and data. The Internet makes this point particularly clear. Not only does the Internet provide the means for increased access to large amounts of different types of information and data, but when using the Internet, it becomes clear how much information has been produced and stored on presumably every possible topic. While one problem produced by this large amount of information is the ability to access a particular scope of information, another significant problem becomes attempting to analyze an ever-increasing amount of information, even when limited to a particular domain.

Analysts are presented with increasing volumes of information and the continued importance to analyze all of this information, not only possibly in a particular field of study or domain, but possibly also information from additional domains or along the fringes of the focus domain. Where an information domain presents numeric data, the increased volume of information may not present a significant constraint on an analyst. However, in a domain where the information available is beyond the amount humans can potentially process, particularly in domains involving socio-economic and political systems and of strategic and competitive nature requiring strategic reasoning, decision makers and analysts can be prevented from fully understanding and processing the information.

Even before the quantity of information becomes an issue, it takes time for an analyst to compose a framework and understanding of the current state of a particular domain. Particular issues are increasingly complex and require a deep understanding of the relationships between the variables that influence a problem. Specific events and past trends may have even more complex implications on and relationships to present and future events. Analysts develop complex reasoning that is required to make determinations based upon the information available and past experience, and decision makers develop complex reasoning and rationale that is required to make decisions based upon the information and determinations of analysts and the intended result. These factors make it difficult for analysts and decision makers to observe and detect trends in complex business and socio-political environments, particularly in domains outside of their realm of experience and knowledge.

However, further burdening analysts and decision makers, increasing amounts and complexities of information available to analysts and decision makers require significantly more time to process and analyze. And much needed information to predict trends may be found in streams of text appearing in diverse formats available, but buried, online. Thus, analysts may be forced to make determinations under time constraints and based on incomplete information. Similarly, decision makers may be forced to make decisions based on incomplete, inadequate, or, simply, poor or incorrect information or fail to respond to events in a timely manner. Such determinations and decisions can lead to costly results. And a delay in processing information or an inability to fully process information can prevent significant events or information from being identified until it may be too late to understand or react.

No tools are known to be available at present for capturing the knowledge and expertise of an analyst or domain expert directly in a simple and straightforward manner. And, currently, domain experts rely upon knowledge engineers and other trained applications professionals to translate their knowledge into a reasoning representation model. This model can then be employed in an automated fashion to search and analyze the available information. To analyze the information properly, the model must be accurate. Unfortunately, these methods of forming models and analyzing information can be time consuming, inefficient, inaccurate, static, and expensive.

### SUMMARY OF THE INVENTION

Embodiments of the present invention provide improved systems, methods, and computer programs to predict the likelihood, the extent, and/or the time of an event or change of occurrence using cognitive causal models with reasoning and text processing for knowledge driven decision support. An underlying causal domain model, and systems, methods, and computer programs for the creation of a causal domain model, may be used to gather and process large amounts of text that may be scattered among many sources, including online, and to generate basic understanding of the content and implications of important information sensitive to analysts or domain experts and decision makers, captured in a timely manner and made available for strategic decision-making processes to act upon emerging trends. An underlying causal domain model, and systems, methods, and computer programs for the creation of a causal domain model, model complex relationships, process textual information, analyze text information with the model, and make inferences to support decisions based upon the text information and the model. Such a causal domain model can be used with an embodiment of the present invention to predict the likelihood, the extent, and/or the time of an event or change of occurrence.

Embodiments of the present invention use a combination of a causal domain model, a model encompassing causal relationships between concepts of a particular domain, and text processing to support the prediction of the likelihood, the extent (or magnitude), and/or time of an event or change of occurrence. For example, after a domain expert creates a causal domain model, the domain expert, or another user, can query the causal domain model to provide a prediction regarding the likelihood, the extent, and/or time of an event or change of occurrence.

Systems for assisting knowledge driven decision support are provided that predict the likelihood, the extent, and/or time of an event or change of occurrence. An example embodiment of a system of the present invention may reduce an unconstrained causal domain model in accordance with a user's query, and any additional information or parameters required for the query, to create a computable submodel, such as, in the case of a Bayesian network, to define a constrained causal domain model, or, in the case of fuzzy logic, to a fuzzy logic system. The computable submodel may them be used to derive quantitative information to provide predictions of the likelihood, the extent, and/or time of an event or change of occurrence.

In addition, corresponding methods and computer programs are provided that predict the likelihood, the extent, and/or time of an event or change of occurrence. These and other embodiments of the present invention are described further below.

### BRIEF DESCRIPTION OF THE DRAWING(S)

FIG. 1 is a diagram combining a causal domain model with text and reasoning processing.

FIG. 2 is a diagram of creating a causal domain model.

FIG. 2A is a pictorial representation of a graphical user interface for defining domain concepts for creating a causal domain model.

FIG. 2B is a pictorial representation of a graphical user interface for providing a text description and defining causal relationships between domain concepts for creating a causal domain model.

FIG. 2C is a pictorial representation of a graphical user interface for defining dimensional units of domain concepts for creating a causal domain model.

FIG. 2D is a pictorial representation of an unconstrained causal domain model.

FIG. 3 is a diagram of reasoning processing.

FIG. 3A is a pictorial representation of a focused unconstrained causal domain model.

FIG. 3B is a pictorial representation of a processed, focused, unconstrained causal domain model.

FIG. 3C is a pictorial representation of a graphical user interface for representing a formalization of a processed, focused, unconstrained causal domain model.

FIG. 3D is a pictorial representation of a graphical user interface for representing a formalization of another processed, focused, unconstrained causal domain model.

FIG. 4 is a diagram of text processing.

FIG. 4A is a pictorial representation of a source document retrieved from the Internet by a text processing routine.

FIG. 4B is a pictorial representation of the text information extracted from a source document by a text processing routine.

FIG. 4C is a pictorial representation of a text profile created from a source document by a text processing routine.

FIG. 5 is a diagram of a knowledge driven decision support system.

FIG. 6 is a schematic block diagram of a knowledge driven decision support system.

FIG. 7 is a schematic block diagram of a process to convert an unconstrained causal domain model for predicting the likelihood, the extent, and/or time of an event or change of occurrence of an embodiment of the present invention.

FIG. 8 is a pictorial representation of an unconstrained causal domain model.

FIG. 9 is a pictorial representation of a graphical user interface for defining causal relationships between domain concepts and defining dimensional units of domain concepts for creating a causal domain model.

FIG. 10 is a pictorial representation of a user defining a query.

FIG. 11A is a pictorial representation of a graphical user interface for representing a formalization of a processed, focused, unconstrained causal domain model.

FIG. 11B is a pictorial representation of a graphical user interface for representing a formalization of another processed, focused, unconstrained causal domain model.

FIG. 12A is a pictorial representation of a graphical user interface for permitting a user to input dimensional units and a choice of time period.

FIG. 12B is a pictorial representation of a graphical user interface for permitting a user to input magnitude of range changes.

FIG. 13A is a pictorial representation of a discrete distribution probability function for a magnitude of change.

FIG. 13B is a pictorial representation of a continuous distribution probability function for a magnitude of change.

FIG. 14 is a pictorial representation of a fragment of a Bayesian network for a causal domain model.

FIG. 15 is a pictorial representation of two consecutive time intervals for a fragment of a dynamic Bayesian network for a causal domain model.

### DETAILED DESCRIPTION

The present inventions will be described more fully with reference to the accompanying drawings. Some, but not all, embodiments of the invention are shown. The inventions may be embodied in many different forms and should not be construed as limited to the described embodiments. Like numbers refer to like elements throughout.

The present invention uses causal domain models as described in U.S. Patent Application Serial No. 11/070,452 to predict the likelihood, the extent, and/or time of an event or change of occurrence. The following section I and subsections are provided to explain the creation, function, and potential uses of causal domain models. A subsequent section II describes the present invention and example embodiments of the present invention.

### I. CAUSAL DOMAIN MODELS

A causal domain model can be described in terms of concepts of human language learning. For example, a subject matter expert (SME) or domain expert or analyst, hereinafter generally described as a domain expert, has existing knowledge and understanding of a particular domain. The domain expert will recognize and understand specific domain concepts and associated keywords and key multi-word phrases. These domain concepts and key words and phrases can be described as the vocabulary of the domain. Similarly, the domain expert will recognize and understand causal relationships between concepts of the domain. These relationships can be described as the grammar of the domain. Together, the domain concepts and causal relationships define the domain model. The domain model can be described as the language of the domain, defined by the vocabulary and grammar of the domain. The combination of a causal domain model and text and reasoning processing presents a new approach to probabilistic and deterministic reasoning.

Systems, methods, and computer programs may combine a causal domain model, a model encompassing causal relationships between concepts of a particular domain, with text processing in different ways to provide knowledge driven decision support. For example, a domain expert creating a causal model can use an initial defined corpus of text and articles to aid or assist in creation of the causal domain model. Similarly, an initial defined corpus of text and articles may be mined manually, semi-automatically, or automatically to assist in building the model. For instance, the initial defined corpus of text and articles may be mined automatically to extract key words and phrases with increased relevance and to identify relationships between these relevant key words and phrases. If performed manually, a domain expert can filter through an accumulation of initial defined corpus of text and articles to create the causal domain model by using the initial defined corpus of text to assist in identifying intuitive categories of events and states relevant to the domain to define domain concepts and to further create a causal domain model by defining labels for domain concepts, attaching text descriptions to domain concepts, identifying key words and phrases for domain concepts, and building causal relationship between domain concepts.

Additional interaction between a causal domain model and text processing may include the validation of the creation of a causal domain model by processing an initial corpus of text and articles to determine whether the causal domain model has been created in a manner acceptable to the domain expert such that the interaction of the causal domain model and the text processing, and possibly also the reasoning processing, results in the expected or intended output. This validation process may be accomplished at various points after the causal domain model has been created as a corpus of articles changes over a period of time to reflect the present state of the domain. In this manner, a domain expert or user may update the causal domain model as desired.

A further combination of a causal domain model and text processing is to have the model serve as a filter to inspect text. This process is similar to the previously described updating of a causal domain model except that by allowing the causal domain model to serve as a filter to inspect text, the model and text processing may be set to run continuously or at periods of time, also referred to as the model being set on autopilot, to allow the model to filter the corpus of text as the corpus of text changes over time. An autopilot filter method allows the model to identify instances for possible changes to the model itself. In this manner the model may automatically or semi-automatically update textual parameters of domain concepts and quantitative and numerical parameters of domain concepts. For example this process may be used semi-automatically to identify supplemental key words and phrases that may be presented to a domain expert to accept or decline as additional key words and phrases for domain concepts of the causal domain model. Similarly, quantitative and/or numerical parameters of the domain and of domain concepts may be automatically or semi-automatically updated, such as increasing or decreasing weights of causal relationships as identified by text and/or reasoning processing of a changing corpus of text in accordance with the domain model. In this manner, a casual domain model may be perceived to learn and adapt from the changes in a domain similar to the manner in which a domain expert may learn additional information about the domain as the corpus of text and articles changes over a period of time and thereby adapt his or her analytical understanding of relationships and reasoning applicable to the domain.

Embodiments of systems, methods and computer programs for combining cognitive causal models with reasoning and text processing for knowledge driven decision support are described below with respect to airline safety. However, causal domain models may also be used in many domains and for a variety of applications, including, for example, competitive intelligence, homeland security, strategic planning, surveillance, reconnaissance, market and business segments, and intellectual property.

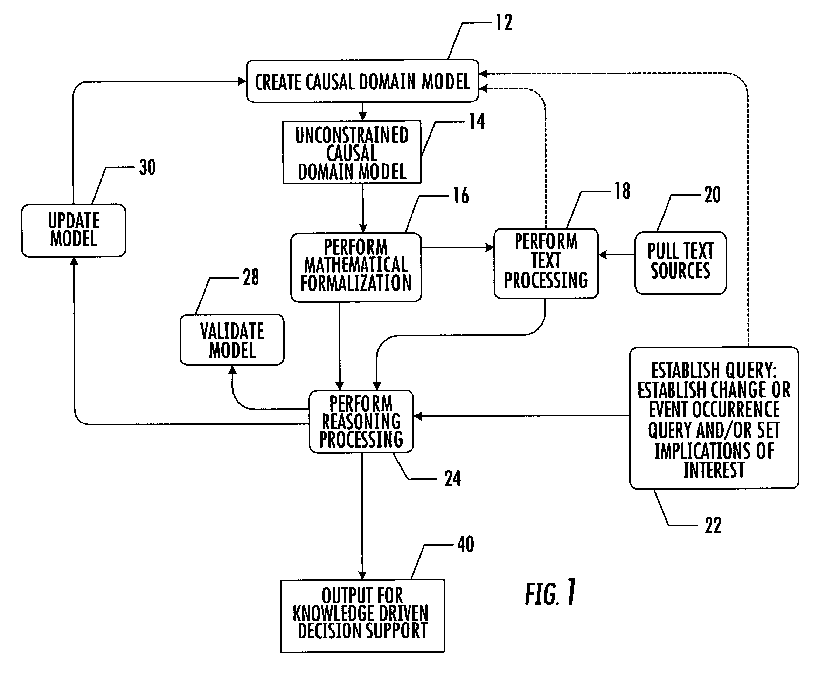

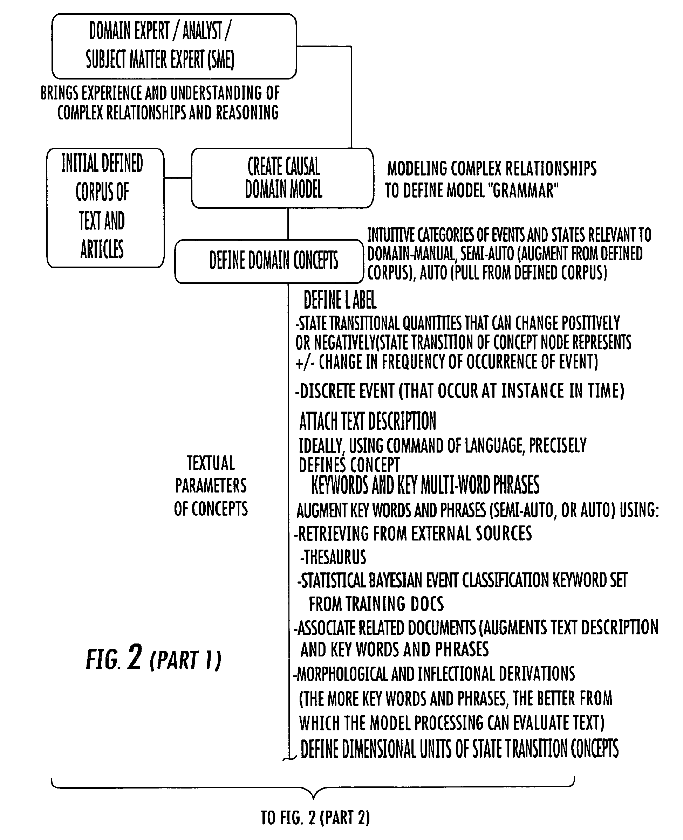

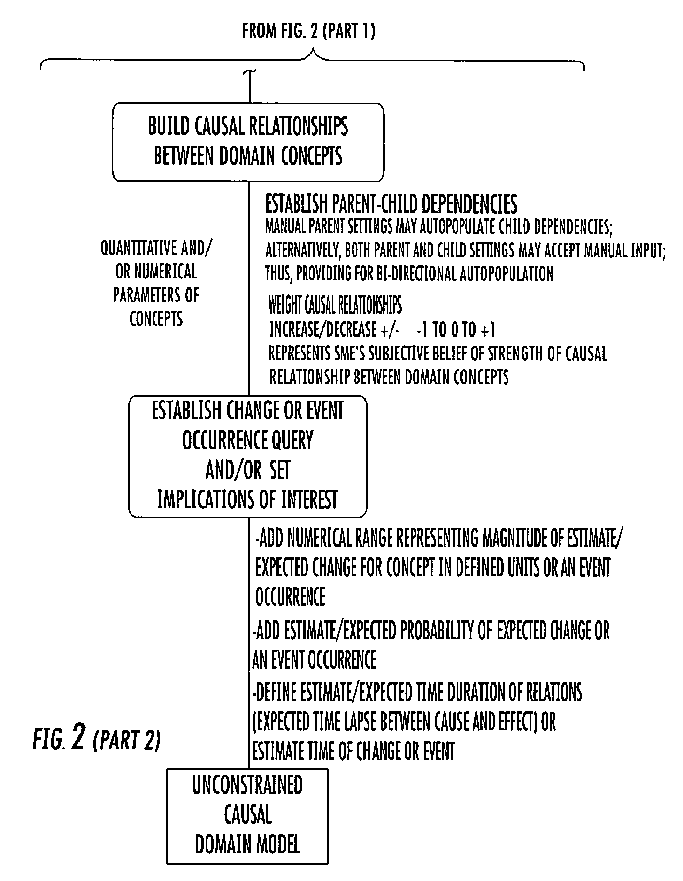

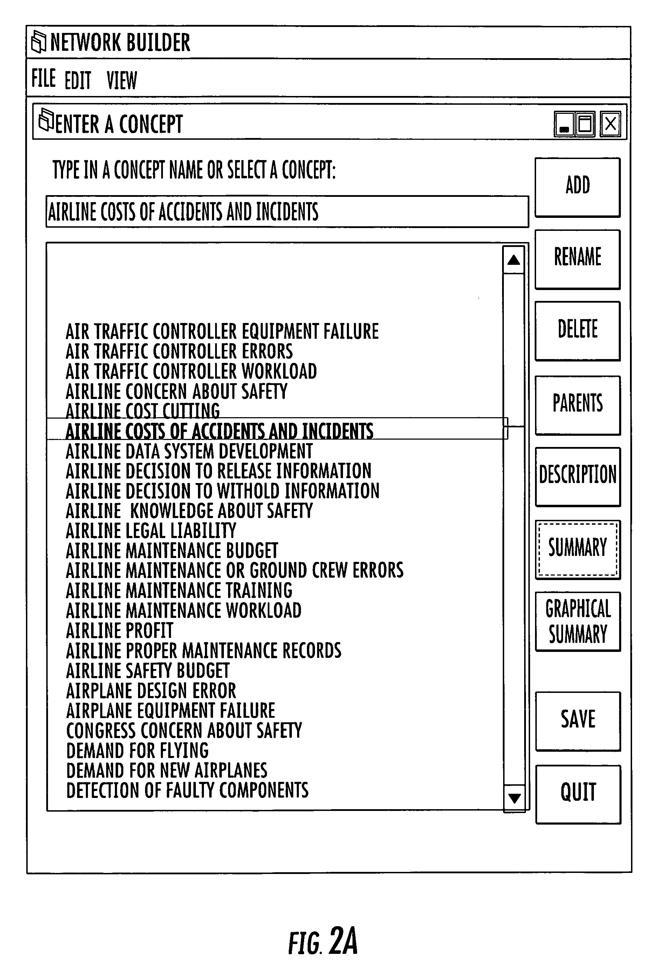

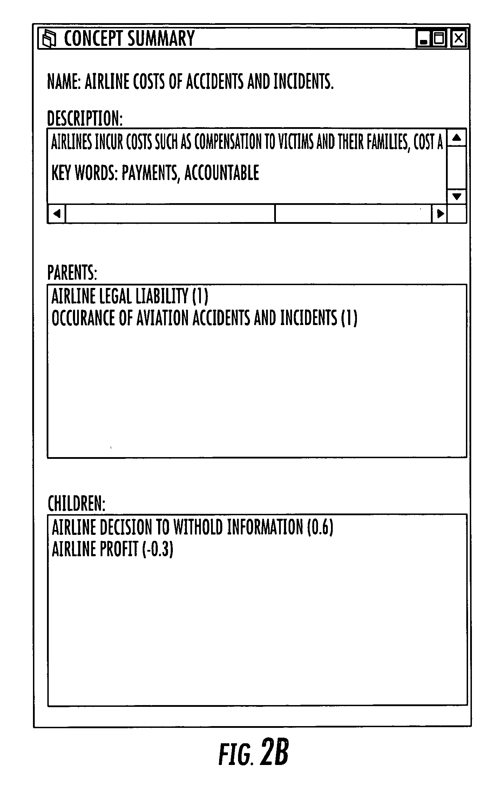

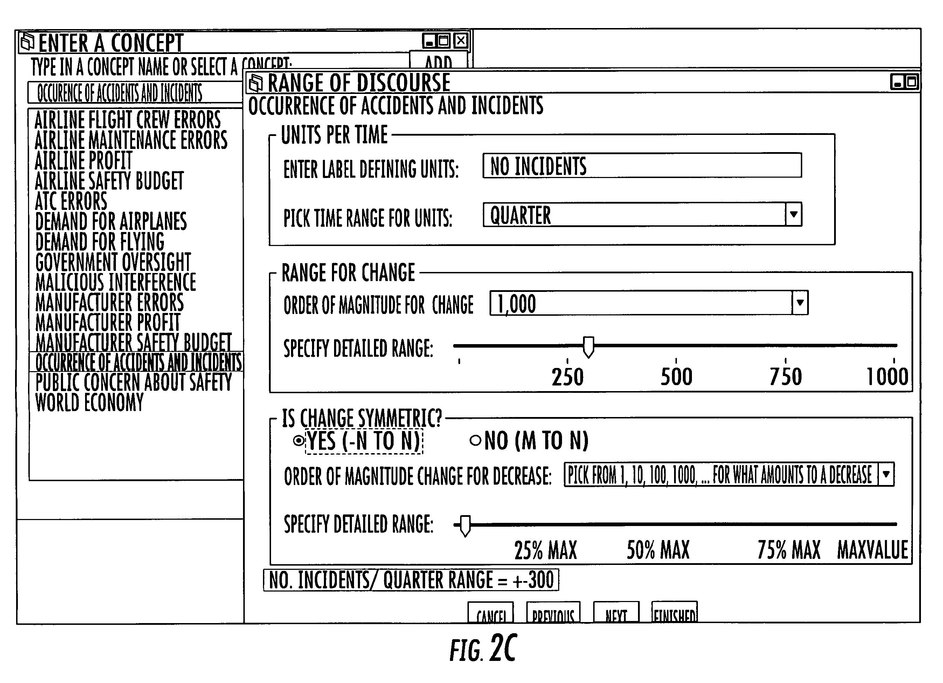

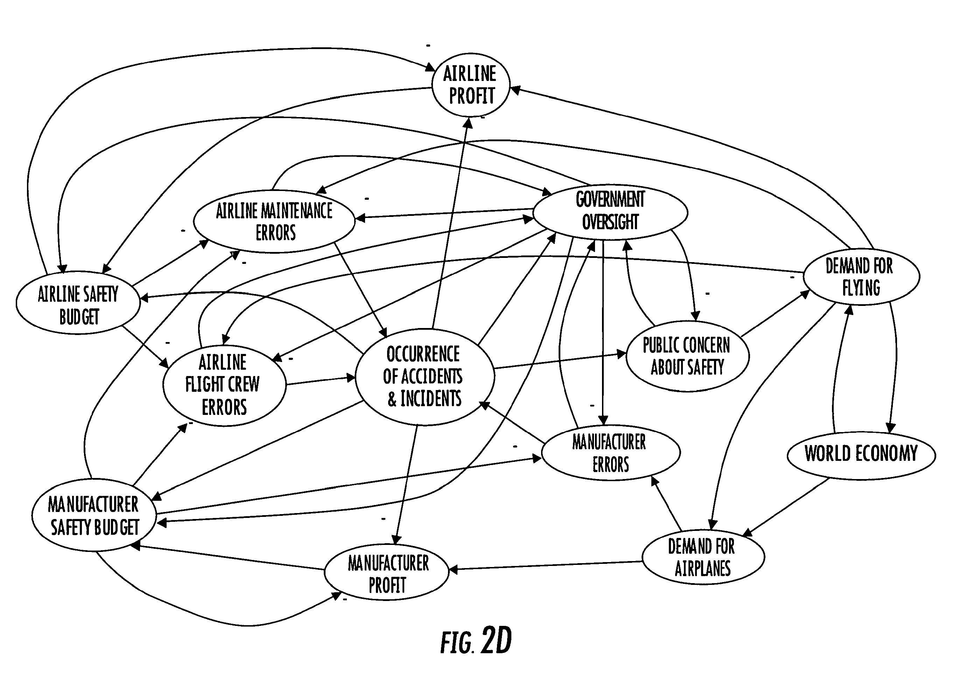

Although systems, methods, and computer programs for combining cognitive causal models with reasoning and text processing for knowledge driven decision support may proceed in various orders and commence with different routines, the embodiment of combining a causal domain model with text and reasoning processing shown in and described with respect to FIG. 1 begins with creation of a causal domain model, as shown at block 12. A causal domain model is a model encompassing causal relationships between concepts of a particular domain. A causal domain model may also include further descriptive information and refinements of the causal relationships, as described further below. The result of creating a causal domain model is an unconstrained causal domain model 14. Mathematical algorithms cannot operate upon the unconstrained form of the domain model 14; thus, the unconstrained causal domain model 14 must be formalized into a mathematical formalization of the unconstrained causal domain model, as shown at block 16. Once a mathematical formalization is created, text processing and reasoning processing may be performed in accordance with the domain model, as shown at blocks 18 and 24. The text and reasoning processing may be used first to validate the model, as shown at block 28, for example, to insure that the model has been created as desired, the mathematical formalization is accurate, and text processing and reasoning processing are performing as expected, as described further below. If necessary or optionally as described below, the causal domain model may be updated for correction or improvement, as shown at block 30. When the proper domain model is established, text sources may be acquired, as shown at block 20, for text processing, and a query may be established for reasoning processing, as shown at block 22. Using the formalization of the causal domain model and the processing methods, a system, method, and/or computer program for combining cognitive causal models with reasoning and text processing provides an output for knowledge driven decision support 40. The previously described concepts of FIG. 1 are further described in FIGS. 2, 3, and 4. Embodiments of the present invention for predicting the likelihood, extent, and/or time of an event or change of occurrence are represented in FIG. 1 as the performance of reasoning processing at block 24, and the predicted likelihood, extent, and/or time of the event or change of occurrence would appear as the output for knowledge driven decision support at block 40.

### A. CREATING A CAUSAL DOMAIN MODEL

Rather than a domain expert working with a knowledge engineer to analyze data under the direction of the domain expert, a domain expert may use a system, method, and/or computer program for combining cognitive causal models with reasoning and text processing for knowledge driven decision support to create a causal domain model as shown in FIG. 2. The domain expert can bring experience and understanding of complex relationships and reasoning to an analytical tool without the need for a knowledge engineer. A task of the domain expert is to create a causal domain model for a particular domain by modeling these complex relationships to define a model grammar that may be used for text and reasoning processing. An interface may be used to assist the domain expert and simplify the creation of the causal domain model. Examples of a graphical user interface and a display output are provided below. However, systems, methods, and computer programs for combining cognitive causal models with reasoning and text processing for knowledge driven decision support may include other interfaces and outputs, and, in one example embodiment, may include input via the Internet, representing embodiments of interfaces that may accept input indirectly, and an email output function, representing embodiments of outputs that may advantageously alert a user at a time after a query has been requested and perhaps repeatedly as new events occur or are thought to have been identified, such as instances in which a user has identified trends and thresholds relating to the public concern for airline safety and where a system, method, and/or computer program for combining cognitive causal models with reasoning and text processing for knowledge driven decision support identifies such a trend or threshold and emails to inform the user.

A graphical user interface (GUI) may be used by a domain expert to easily and rapidly create a causal domain model. The graphical user interface, and other interfaces, may use commonalities and uniformity to allow for capture of complex causal dependencies by entry of the same type of information attached to each concept, regardless of the semantic meaning of the concept. For example, a graphical user interface may ensure that the causal relationships of the model are correctly established. A graphical user interface provides a domain expert the ability to build and refine a causal domain model in a manner that creates a causal domain model that may be formalized and used for analyzing information related to the domain. Creating a causal domain model includes defining domain concepts. Domain concepts are intuitive categories of events and states relevant to the domain. For example, with reference to FIG. 2A, "Airline Cost of Accidents and Incidents" and "Detection of Faulty Components" are intuitive categories of events and states relevant to the domain of airline safety, particularly relevant to public concern about airline safety. The concepts may be defined manually, semi-automatically, or automatically. If defined manually, a domain expert may provide the information about the concept. For example, a domain expert may identify and describe the domain and concepts thereof using labels, phrases, and/or textual names If defined semi-automatically, concepts may be identified by text and/or reasoning processing algorithms, as described further below, from a defined corpus and selectively accepted by a domain expert. For example, text and/or reasoning processing may identify concepts of a domain from relevance classification, event occurrence, and/or reasoning algorithms that may then be selected or rejected by a domain expert. If domain concepts are defined automatically, the concepts may be pulled from a defined corpus of text and automatically accepted as domain concepts for the causal domain model.

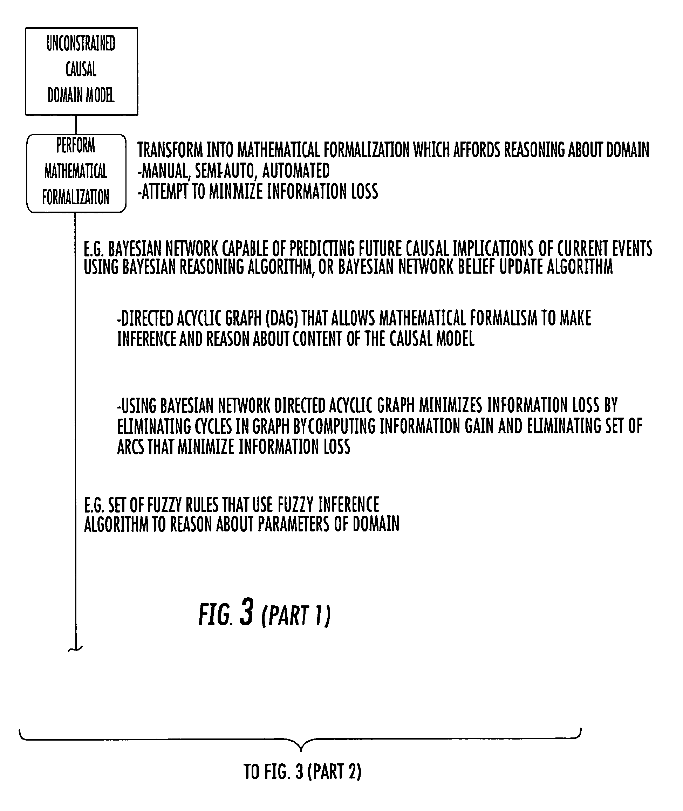

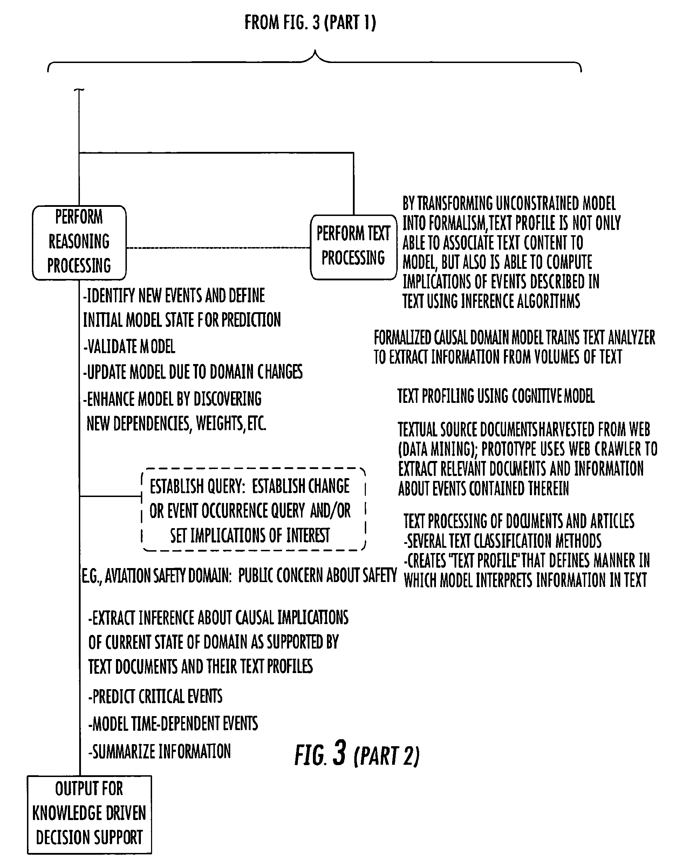

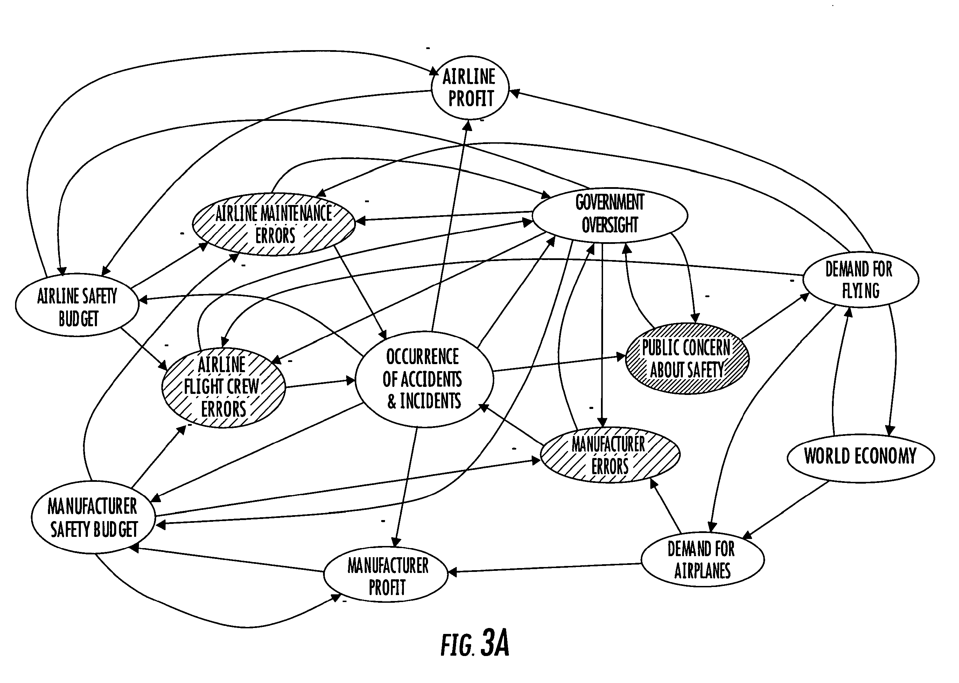

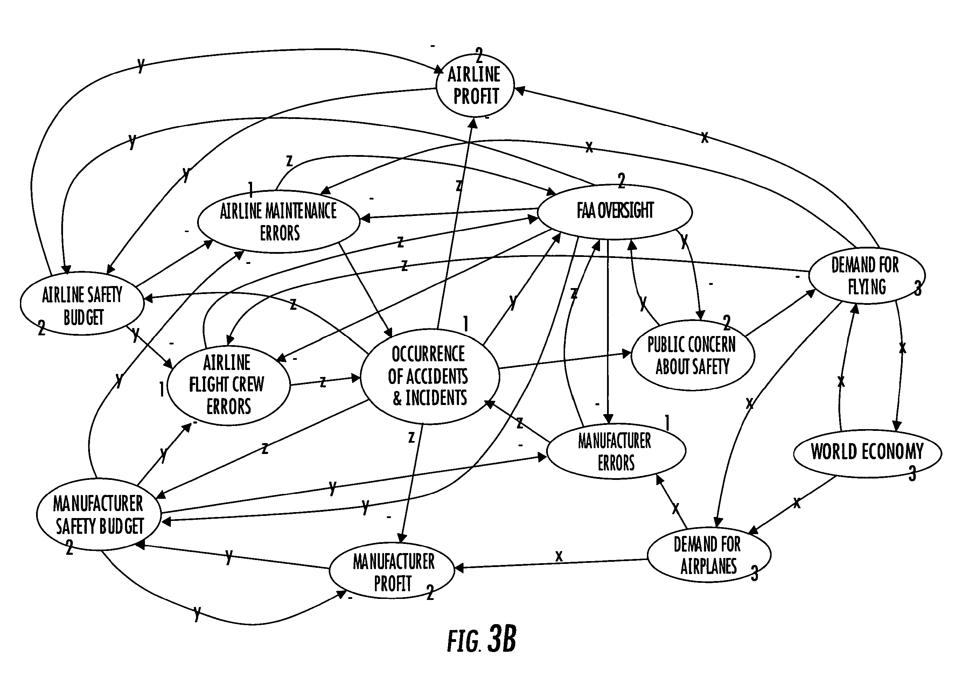

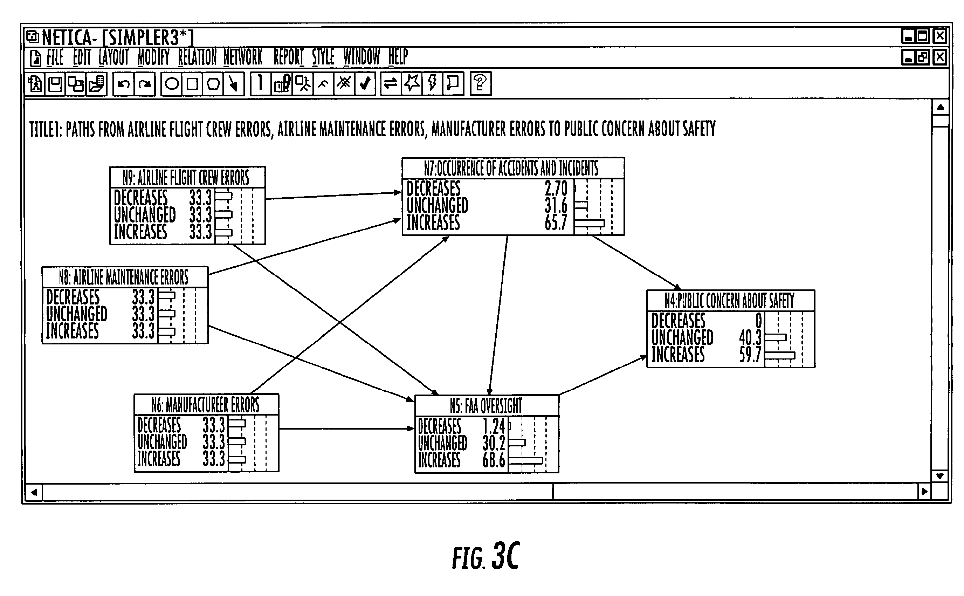

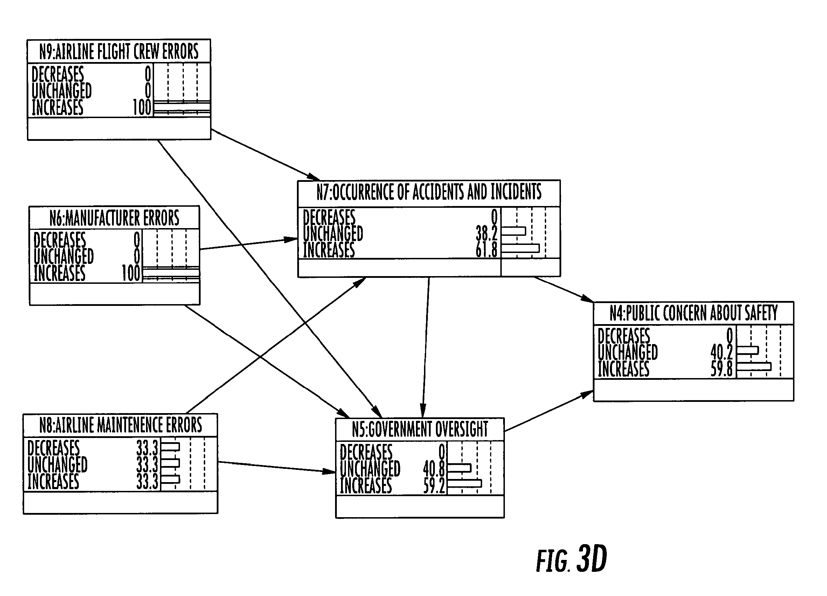

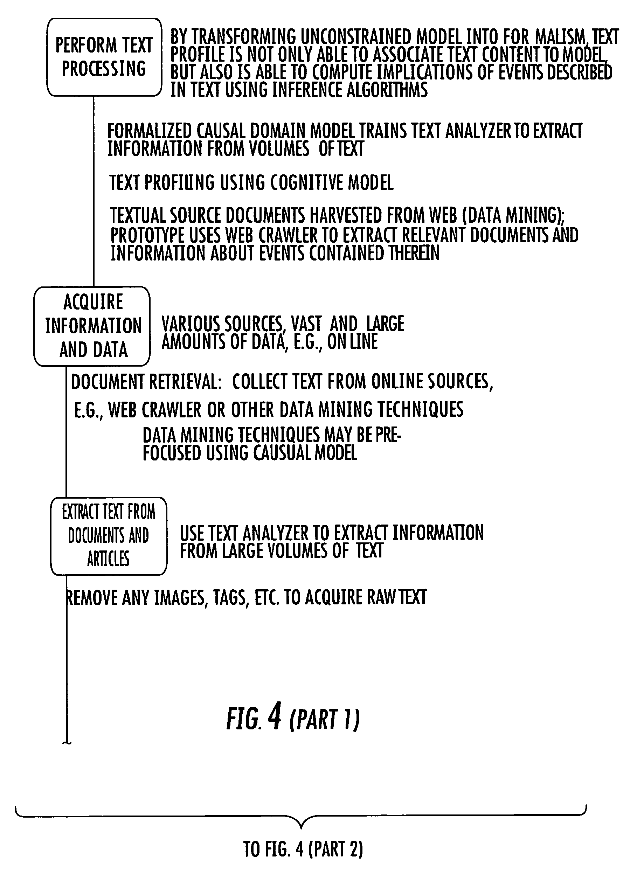

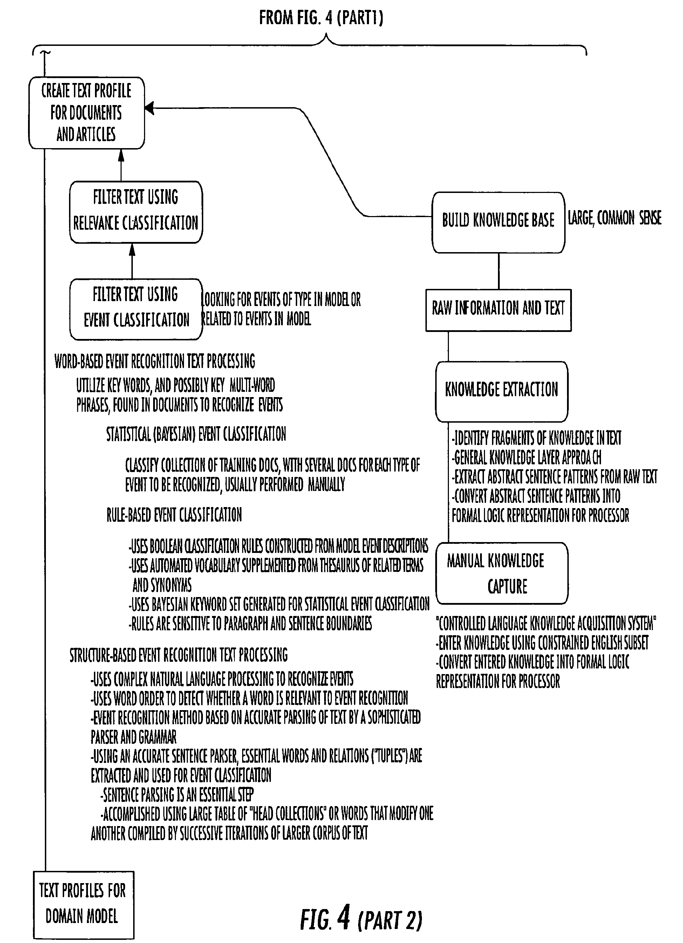

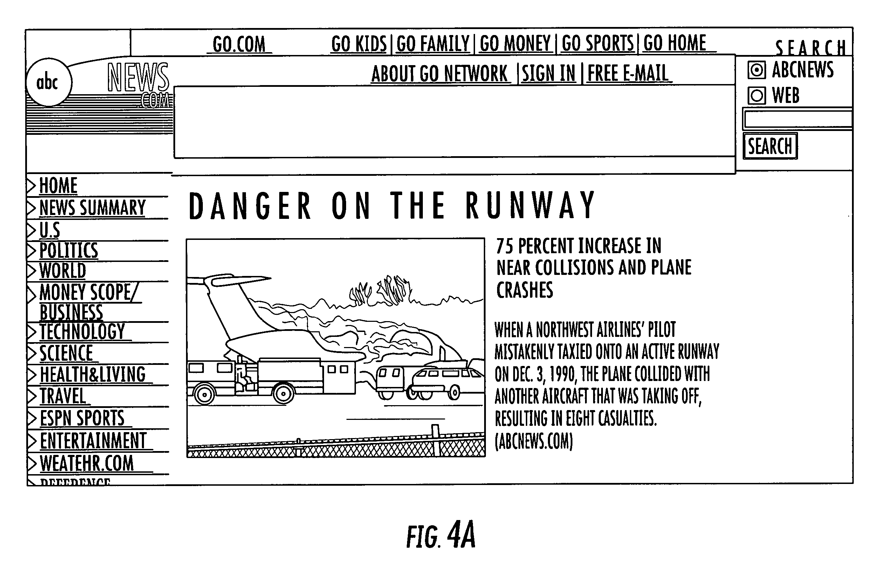

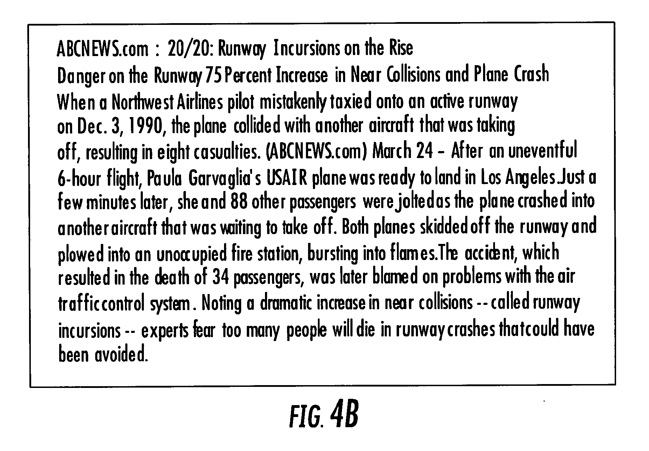

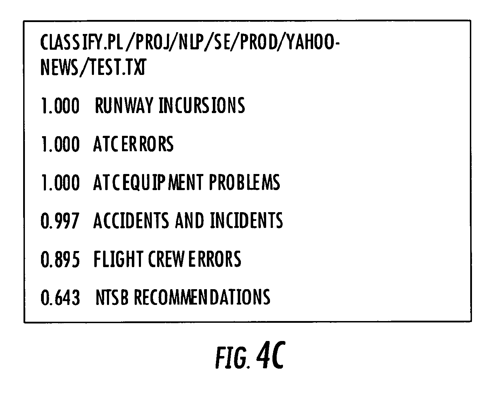

Defining domain concepts may include defining a label for the domain concept. Typically, a label is a textual name for the domain concept, such as "Airline Maintenance Budget" and other domain concepts as shown in FIG. 2A. A label may also identify a discrete event. A domain concept may also be defined by attaching a text description to the concept that provides a precise definition of the concept. The text description may be described as an abbreviated explanation of the domain concept, such as the truncated description of the domain concept "Airline Costs of Accidents and Incidents" shown in FIG. 2B. A domain concept may also be defined by including keywords and key multi-word phrases that are associated with the domain concept. For example, the domain concept Airline Costs of Accidents and Incidents may be further defined by including the keywords "payments" and "accountable," as shown in FIG. 2B. Key words and phrases may be augmented either semi-automatically or automatically using retrieval from external sources, morphological and inflexional derivations of other key words and phrases, and text and/or reasoning processing of documents. Further details regarding text and reasoning processing are provided below with respect to FIGS. 3 and 4. The more key words and phrases that are entered or augmented for a domain concept, the better a casual domain model may be used to process and evaluate text. External sources from which key words and phrases may be retrieved include a thesaurus, statistical Bayesian event classification keyword sets from training documents, and associated and/or related documents. A statistical Bayesian event classification keyword set is later described with regard to text processing in FIG. 4. Associated and/or related documents may be attached to a domain concept to provide further description and additional key words and phrases. The label, text description, key words and phrases, and associated and/or related documents are generally referred to as the textual parameters of domain concepts.

In addition to textual parameters, domain concepts may be further defined by quantitative and/or numerical parameters. A domain concept may be a state transitional quantity that can change positively or negatively to represent a positive or negative change in frequency of occurrence of an event. For example, a domain concept may be further defined by dimensional units of state transitions. Additional quantitative and/or numerical parameters may be defined when building causal relationships between defined domain concepts. Similarly, additional quantitative and/or numerical parameters may be defined for a query, as described further below. For example, when creating a causal domain model, parent and child dependencies or relationships between domain concepts typically are established. Causal relationships may be entered manually, semi-automatically, or automatically. For example, a domain expert may manually identify that one domain concept has a causal relationship with at least one other domain concept, such as how the domain concept Airline Costs of Accidents and Incidents is a parent concept to the concepts of "Airline Legal Liability" and "Occurrence of Aviation Accidents and Incidents" and a child concept to the concepts of "Airline Decision to Withhold Information" and "Airline Profit," as shown in FIG. 2B. When a domain concept is identified as a parent of another concept such that a parental setting is established, a child dependency may autopopulate for the child concept to identify the child concept as being a child of the parent concept. Alternatively, or in addition, both parent and child settings may be accepted by manual input, thus providing for bidirectional autopopulation either from the parent or child dependency. In addition to establishing causal relationships, an embodiment of a system, method, or computer program for combining cognitive causal models with reasoning and text processing for knowledge driven decision support may accept causal relationship weight variances from negative 1 to 0 to positive 1, and all values in between. The range of negative 1 to 0 to positive 1 reflects the change from an inverse causal relationship (-1) to no causal relationship (0) to a direct causal relationship (+1). For example, Airline Profit has a -0.3 causal relationship to Airline Costs of Accidents and Incidents. Thus, when Airline Costs of Accidents and Incidents increases by a factor of C, Airline Profits decrease by a factor of 0.3 x C. The weight of causal relationships may be entered by the domain expert to represent the domain expert's subjective belief of the strength of the causal relationship between domain concepts.

Further quantitative or numerical parameters of domain concepts may be used to establish a particular change or event occurrence. Such parameters may further define a domain concept, weights of causal relationships, and/or a query for use of the causal domain model. For example, a domain expert or other user may add a numerical range representing the magnitude of the estimated or expected change for a domain concept in the defined units. As shown in the example of FIG. 2C, an order of magnitude for change of 1000 has been selected to permit the domain expert to specify on the sliding scale that an event of the domain concept Occurrence of Accidents and Incidents has a factor of approximately 290 of change with respect to relationships with other domain concepts, specifically child dependencies. A domain expert or user may define the estimated or expected time duration of relationships or the estimated time of a change or event. Typically these estimated or expected time durations represent the time lapse between a cause and effect.

Using systems, methods, and computer programs for combining cognitive causal models with reasoning and text processing for knowledge driven decision support is a consistent, simple, and expedient way to allow a domain expert to create a causal domain model. Systems, methods, and computer programs for combining cognitive causal models with reasoning and text processing for knowledge driven decision support allow for adjustability in changing parameters of the model and updating relationships and further defining domain concepts and grammar of the domain model, i.e., the language of the domain. One advantage of systems, methods, and computer programs for combining cognitive causal models with reasoning and text processing for knowledge driven decision support is the simplistic approach of allowing a domain expert to define the causal domain model without needing to understand the reasoning methodology underlying the analytical tool that enables the performance of the analysis of information relevant to the domain. Using systems, methods, and computer programs for combining cognitive causal models with reasoning and text processing for knowledge driven decision support, a domain expert can offload bulk processing of text and articles and receive detection of alerts to events and trends. For example, once the casual domain model has been constructed, it may be implemented in a particular domain to analyze documents and/or identify information within the documents, if any, related to the casual domain model. The amount of text and number of documents that can be analyzed is limited merely by, for example, the rate at which documents and text therein can be acquired and the processing power of the processor such as a computer to perform text and reasoning algorithms upon the acquired text. The domain expert can later adjust textual, quantitative, and/or numerical parameters of the model.

By way of further explanation of systems, methods, and computer programs for combining cognitive causal models with reasoning and text processing for knowledge driven decision support, FIGS. 2A, 2B, 2C, and 2D are an embodiment of the respectively defined concepts as used in the domain of airline safety. For example, the domain concepts, or more appropriately the labels of the domain concepts, visible in FIG. 2A relate to various intuitive categories associated with airline safety, and the description and key words in FIG. 2B relate to a particular airline domain concept, Airline Costs of Accidents and Incidents.

FIG. 2A is a pictorial representation of an example embodiment of a graphical user interface for defining domain concepts. The graphical user interface allows a domain expert to define domain concepts by defining labels for each concept name, such as Airline Costs of Accidents and incidents as highlighted in FIG. 2A. The graphical user interface provides the domain expert the ability to quickly select a concept and then to further define information about the concept, such as attaching a description or providing additional summary information such as key words and phrases, attached documents, and causal relationships between parent and child concepts, such as using buttons as those shown in FIG. 2A.

FIG. 2B is a pictorial representation of an example embodiment of a graphical user interface for providing a text description for defining causal relationships between domain concepts. A user might use the graphical user interface of FIG. 2B by selecting the Description button in the graphical user interface of FIG. 2A. The graphical user interface in FIG. 2B allows a domain expert to provide further information about a concept. For example, the description of the domain concept Airline Costs of Accidents and Incidents can be entered along with key words and phrases. In addition, causal relationships may be established between domain concepts by defining a domain concept as a parent or child of another domain concept, as well as the weighting therebetween as shown in parentheses.

FIG. 2C is a pictorial representation of an example embodiment of a graphical user interface for defining dimensional units of domain concepts. The graphical user interface allows a domain expert to define units for a concept. For example, in FIG. 2C the units per time and the range for units may be entered, such as the number of incidents per quarter for the domain concept Occurrence of Accidents and Incidents. Similarly, the range for change may be established by a magnitude of change and a detailed sliding scale. In addition, the domain expert may be able to establish whether or not a domain concept is symmetric. Additional quantitative and/or numeric information may be added in this or other embodiments of systems, methods, and computer programs for combining cognitive causal models with reasoning and text processing for knowledge driven decision support.

FIG. 2D is a pictorial representation of a directed graph of an unconstrained causal domain model for combining cognitive causal models with reasoning and text processing for knowledge driven decision support, or at least a fragment thereof. The directed graph in FIG. 2D has cycles or connections that circle back from one node to the original node. Nodes are connected based on causal relationships, and the casual relationships may represent positive and negative casual dependences of the connection. For example, the "Manufacturer Safety Budget" concept node relates to the "Manufacturer Errors" concept node with an inverse causal relationship as noted by the (-) sign associated with the arc. The causal relationships and weightings between nodes of FIG. 2D are established from parent and child relationships of a domain mode, such as defined by a domain expert using the graphical user interfaces of FIGS. 2A, 2B, and 2C.

### B. MATHEMATICAL FORMALIZATION OF CAUSAL DOMAIN MODEL, TEXT PROCESSING, AND REASONING PROCESSING

FIG. 3 is a diagram of reasoning processing. As previously discussed, certain aspects of combining cognitive causal models with reasoning and text processing for knowledge driven decision support are not independent of other various aspects of knowledge driven decision support, such as how the embodiment of reasoning processing shown in FIG. 3 incorporates or draws upon the concept of performing text processing and having previously defined a causal domain model. Similarly, the reasoning processing in FIG. 3 uses the unconstrained causal domain model created by a domain expert as described above. Thus, various aspects of systems, methods, and computer programs for combining cognitive causal models with reasoning and text processing for knowledge driven decision support are intertwined and related, such as shown in FIG. 1.

1. Mathematical Formalization of Causal Domain Model

The creation of a causal domain model by a domain expert results in an unconstrained causal domain model, which is a directed graph with cycles as shown in the example of FIG. 3A. In a directed graph with cycles of the unconstrained causal domain model, nodes of the graph represent domain concepts. The nodes are connected by influence arcs which may be causal or probabilistic in nature. And arcs of the graph represent weights of believed causal relationships between the nodes.

Prior to performing reasoning algorithms, the unconstrained causal domain model is converted from an unconstrained causal domain model into a formalization by performing mathematical formalization on the unconstrained causal domain model. The mathematical formalization may be performed manually, semi-automatically, or automatically. By transforming the unconstrained causal domain model into a mathematical formalization, the formalized model can support processing of the domain using mathematical reasoning algorithms. When converting the unconstrained causal model to a formalization, minimizing information loss may aid in retaining the causal domain model as intended by the domain expert. Based on information input by a domain expert or user creating an unconstrained causal domain model, different causal domain models can be constructed to formalize the domain concepts and causal relationships between domain concepts. For example, a formalized domain model may be constructed utilizing model-based reasoning, case-based reasoning, Bayesian networks, neural networks, fuzzy logic, expert systems, and like inference algorithms. An inference algorithm generally refers to an algorithm or engine of one or more algorithms capable of using data and/or information and converting the data and/or information into some form of useful knowledge. Different inference algorithms perform the conversion of data and/or information differently, such as how a rule-based inference algorithm may use the propagation of mathematical logic to derive an output and how a probabilistic inference algorithm may look for linear correlations in the data and/or information for a predictive output. Many inference algorithms incorporate elements of predictive analysis, which refers to the prediction of a solution, outcome, or event involving some degree of uncertainty in the inference; predictive analysis typically refers to a prediction of *what* is going to happen but, alternatively or in addition, may refer to a prediction of *when* something might happen. Different types of inference algorithms, as mentioned above, may be used with embodiments of systems, methods, and computer programs for combining cognitive causal models with reasoning and text processing for knowledge driven decision support. Since Bayesian networks can accept reliability data as well as information from other sources, such as external information from a knowledge base, and can compute posterior probabilities for prioritizing domain concepts, a formalized causal domain model of one advantageous embodiment is constructed based upon a Bayesian network that is capable of being updated. See, for example, S.L. Lauritzen et al., Local Computations with Probabilities on Graphical Structures and Their Applications to Expert Systems, Journal of the Royal Statistical Society B, Vol. 50, pp. 157-224 (1988), for a more detailed discussion of the Bayesian probability update algorithm. A number of software packages are commercially available for building models of a Bayesian network. These commercially available software packages include DXpress from Knowledge Industries, Inc., Netica™ from Norsys Software Corporation of Vancouver, British Columbia, and HUGIN from Hugin Expert A/S of Denmark. As provided by these commercially available software packages, a processing element may advantageously include a software package that includes noisy max equations for building the Bayesian network that will form the formalized causal domain model.

Regardless of the model building tool that is used, the general approach to constructing a Bayesian network for decision support is to map parent domain concepts to the child domain concepts. While any model building approach can be used, several model building approaches for Bayesian networks are described by M. Henrion, Practical Issues in Constructing a Bayes' Belief Network, Uncertainty in Artificial Intelligence, Vol. 3, pp. 132-139 (1988), and H. Wang et al., User Interface Tools for Navigation in Conditional Probability Tables and Graphical Elicitation of Probabilities in Bayesian Networks, Proceedings of the Sixteenth Annual Conference on Uncertainty and Artificial Intelligence (2000).

The construction of a Bayesian network requires the creation of nodes with collectively exhaustive, mutually exclusive discrete states, and influence arcs connecting the nodes in instances in which a relationship exists between the nodes, such as in instances in which the state of a first node, i.e., the parent node, effects the state of a second node, i.e., the child node. In a Bayesian network, a probability is associated with each state of a child node, that is, a node that is dependent upon another node. In this regard, the probability of each state of a child node is conditioned upon the respective probability associated with each state of each parent node that relates to the child node.

An example formalized domain model is a directed acyclic graph (DAG) Bayesian network capable of predicting future causal implications of current events that can then use a Bayesian reasoning algorithm, or Bayesian network belief update algorithm, to make inferences from and reason about the content of the causal model to evaluate text. By using a Bayesian network directed acyclic graph, the transformation from an unconstrained causal model minimizes the information loss by eliminating cycles in the unconstrained graph by computing information gained and eliminating the set of arcs that minimize the information lost to remove the cycles and create the direct acyclic graph. Another example of a formalized domain model is a set of fuzzy rules that use fuzzy inference algorithms to reason about the parameters of the domain.

The nodes of a Bayesian network include either, or both, probabilistic or deterministic nodes representative of the state transition and discrete event domain concepts. Typically, the nodes representative of domain concepts are interconnected, either directly or through at least one intermediate node via influence arcs. The arcs interconnecting nodes represent the causal relationships between domain concepts. For example, FIGS. 3C and 3D show representative concept nodes related to the public concern about airline safety where nodes are interconnected, directly and through at least one intermediate node via influence arcs. Based on interconnections of concept nodes, intermediate nodes may interconnect at least two domain concept nodes in an acyclic manner. Bayesian networks do not function if a feedback loop or cycle exists. Therefore, influence arcs are not bidirectional, but only flow in one direction.

Each node of a network has a list of collectively exhaustive, mutually exclusive states. If the states are normally continuous, they must be discretized before being implemented in the network. For example, a concept node may have at least two states, e.g., true and false. Other nodes, however, can include states that are defined by some quantitative and/or numerical information. For example, Airline Profit may contain six mutually exclusive and exhaustive states, namely, strong profits, moderate profits, weak profits, no profit, losing profits, and bankrupt. Alternatively, Airline Profit may contain a defined range of states, such as from positive one hundred million to negative one hundred million. A probability, typically defined by a domain expert, may be assigned to each state of each node. A probability may be obtained from or related to another node or nodes. For example, as shown in FIGS. 3C and 3D, the probability of Occurrence of Accidents and Incidents may be exclusively based on or derived in part from such domain concepts as Airline Flight Crew Errors, Manufacturer Errors, and Airline Maintenance Errors, where the interconnecting arcs therebetween and influence of probabilities are based upon their respective causal relationships and weightings.

FIGS. 3A, 3B, 3C, and 3C provide examples of a formalization of an unconstrained causal domain model as described above. FIG. 3A is a pictorial representation of a focused unconstrained causal domain model which is a result of an embodiment of a system, method, and/or computer program for combining cognitive causal models with reasoning and text processing for knowledge driven decision support where a domain expert has predicted the probability, magnitude, and time of a target domain concept change due to changes in other source concepts. For example, the domain expert has selected Airline Maintenance Errors as a source concept and Occurrence of Accidents and Incidents as a target concept. Further source concepts for the target concept Occurrence of Accidents and Incidents also include Airline Flight Crew Errors and Manufacturer Errors. Source and target concepts are not the same as parent and child concepts, but are beginning and ending concepts for a query of set of implications of interest. However, underlying source and target concepts are at least one parent and child concept pairing and at least one causal relationship between the parent and child concepts. The source and target concepts and related predictions of probability, magnitude, and time of the target concept change due to changes in other source concepts focus the causal domain model with respect to the Public Concern about Safety Domain concept. For example, the relationship between the domain concepts Government Oversight and Airline Maintenance Errors may strengthen over time if the government determines that Airline Maintenance Errors are an increasing cause of airline accidents or incidents. In such a case, the causal relationship may shift from zero, representing no influence, to +0.75, representing a subjective believed strength of direct influence between the domain concepts. These causal relationships may be further defined as shown in FIG. 3B, which is a pictorial representation of a graphical user interface for representing a formalization of a processed focused unconstrained causal domain model of a system, method, and/or computer program for combining cognitive causal models with reasoning and text processing for knowledge driven decision support. FIG. 3A shows where the domain expert or user may have identified particular domain concepts of importance, i.e., Airline Maintenance Errors, Airline Flight Crew Errors, and Manufacturer Errors, and a target domain concept, i.e., Public Concern About Safety, that relates to a particular query, e.g., the probability of change of public concern about safety in the current state of the airline industry domain. FIG. 3B represents an intermediate transformation of the focused unconstrained causal domain model of FIG. 3A. FIG. 3B shows how mathematical formalization may compute values for information obtained by causal relationships and importance of particular domain concepts, such as how influence arcs have been valued or categorized as x, y, or z and domain concepts valued by 1, 2, or 3. Levels of categorization is an example of one method for formalizing domain models. For example, during mathematical formalization, values of relative importance of the concepts may be calculated, such as 1 being most important and 3 being less important as shown in FIG. 3B. Similarly, during mathematical formalization, values or categorization of importance of the relationship arcs between concepts may be calculated, such as z being necessary, y being optional, and x being unnecessary as shown in FIG. 3B. Formalization typically takes into account the computation of information gained and minimization of information loss where arcs can be removed from the cyclical graph as represented in FIGS. 3C and 3D. FIGS. 3C and 3D involve the same concepts and directed relationships, however the numerical parameters of the domain concepts and weight of relationships are different between the two, representing different causal domain models, or at least different versions of a causal domain model. However, different causal domain models, such the causal domain models expressed in FIGS. 3C and 3D, may result in similar outcomes, as described further below. FIG. 3C is a pictorial representation of a graphical user interface for representing a formalization of a processed focused unconstrained causal domain model. FIG. 3D is a pictorial representation of a graphical user interface for representing a formalization of a processed focused unconstrained causal domain model and resulting graph of initial domain model state. In both FIG. 3C and FIG. 3D, the directed relationships from the Public Concern About Safety to the source concepts of Airline Flight Crew Errors, Airline Maintenance Errors, and Manufacturers Errors and intermediate source concepts Occurrence of Accidents and Incidents and Government Oversights have been removed such that the causal relationships remaining after the transformation from an unconstrained causal domain model to a mathematical formalization result in acyclic graphs that flow from source concepts to target concepts and intermediate source concepts to the final target concept, Public Concern About Safety. The directed causal relationships or influence arcs between target and source concepts of FIGS. 3C and 3D may influence probabilistic or deterministic values of source concepts. For example, FIGS. 3C and 3D, involving the same concepts and directed relationships but with different numerical parameters of the domain concepts and weight of relationships, arrive at different probabilistic results for Public Concern About Safety. However, it may also be useful to note that the domain models of FIGS. 3C and 3D result in different intermediate domain concept probabilities but arrive at similar resultant target concept probabilities. This may not be intended, but reflects that, just as two domain experts may interpret a situation differently and, therefore, create different domain models, systems, methods, and computer programs for combining cognitive causal models with reasoning and text processing for knowledge driven decision support provide the versatility of accepting different models to evaluate the same or similar domains, and may, as in FIGS. 3C and 3D, arrive at similar results, just as two domain experts may have done without the assistance of a system, method, and/or computer program for combining cognitive causal models with reasoning and text processing for knowledge driven decision support. However, by using a system, method, and/or computer program for combining cognitive causal models with reasoning and text processing for knowledge driven decision support the domain experts may arrive at these results much faster and may be able to analyze much larger quantities of information, thereby decreasing the chance that important information may not be analyze or that results may be incomplete or incorrect due to limited information.

2. Text and Reasoning Processing

Once a formalized domain model is established, text and reasoning processing algorithms may operate based on the domain model, such as to process text and determine results. Text processing refers to performing text processes or text algorithms, such as embodied in a text processing tool or engine. Reasoning processing refers to performing reasoning processes or reasoning algorithms, such as embodied in a reasoning processing tool or engine typically including one or more inference algorithms. Text processing tools typically also involve inference algorithms for extraction of text data and identifying inferences from text. FIG. 3 defines other details related to performing reasoning processing. For example, aspects of performing reasoning processing include identifying trends and defining an initial model state for further prediction, validating the model, updating the model due to domain changes, and enhancing the model by discovering new dependencies, weights, etc.

The performance of reasoning processing shown in FIG. 3 may be, for example, execution of the Bayesian network belief update algorithm or similar reasoning algorithm such as other inference algorithms. The performance of reasoning processing applies the formalized causal domain model to specifically acquired text profiles, described further with respect to FIG. 4. The performance of deterministic and resultant reasoning processing requires that, either prior to or for the purpose of performing the deterministic or resultant reasoning processing, a domain expert or other user establish a query, as shown in block 22 of FIG. 1 and in FIG. 2. By establishing a query the domain expert or user establishes a change or event occurrence query and/or a set of implications of interest. A causal domain model that has been transformed into a mathematical formalization and processed with reasoning and text algorithms in accordance with an established query for the causal domain model can provide an output for knowledge driven decision support. For example, an embodiment of a system, method, or computer program for combining cognitive causal models with reasoning and text processing for knowledge driven decision support may provide an output that extracts an inference about causal implications of the current state of the domain as supported by text documents and the text profiles of the documents. Further, a query, such as identifying the probability of public concern about airline safety based upon the current state of the domain, supported by related documents, could generate an output that identifies that the probability of public concern about airline safety increasing is 59.8% and remaining unchanged is 40.2%, as shown in FIG. 3D. An output can predict critical events or model time dependent events. In addition, an embodiment of a system, method, or computer program for combining cognitive causal models with reasoning and text processing for knowledge driven decision support can summarize information about a prediction or modeling of an event or the extraction of an inference. The output of an embodiment of a system, method, and/or computer program for combining cognitive causal models with reasoning and text processing for knowledge driven decision support can then be used by a domain expert or a decision maker to assist in the decision making process.

FIG. 4 is a diagram of text processing. By transforming an unconstrained causal domain model into a mathematical formalization, a text profile resulting from initial text processing is not only able to associate text content to the model such as by matching text content to the formalized model or identifying key words and phrases for domain concepts, but is also able to compute implications of interest, e.g., detecting trends, buried in the text using inference algorithms. Text processing of systems, methods, and computer programs for combining cognitive causal models with reasoning and text processing for knowledge driven decision support includes the concept that the formalized causal domain model trains the text processing or text analyzer to extract information from text. The information in the formalized causal domain model is used by the resulting text processing or text analyzer. Thus, systems, methods, and computer programs for combining cognitive causal models with reasoning and text processing for knowledge driven decision support may be described as text profiling using a cognitive model. Before text processing can begin, information and data is acquired upon which text processing can be performed. One advantageous feature of systems, methods, and computer programs for combining cognitive causal models with reasoning and text processing for knowledge driven decision support is the ability to evaluate large amounts of data. Text source documents may be harvested or data mined from the Internet and other sources, such as shown in FIG. 4A. A web crawler can be used to extract relevant documents and information about events described by the documents from the Internet. Various methods of data mining may be used to acquire information and data upon which text processing of systems, methods, and computer programs for combining cognitive causal models with reasoning and text processing for knowledge driven decision support is performed. The term data mining has several meanings along a spectrum from data extraction, such as identifying and extracting relevant instances of a word or sections of text in a document, to finding an answer from a set of documents based on a domain model, to learning inferences that might be used in an inference engine. Typically data mining as used in the context of extraction of text refers to data extraction, but may also involve finding an answer or learning or identifying an inference. Typical data mining tools may also use inference algorithms, such as Bayesian classification of text for identifying text for extraction. The document retrieval process may be unrestricted or may be focused from the domain model. For example, a data mining technique or a web crawler may be focused by the key words and phrases or other information embodied in the domain model. Once information and data have been acquired, such as various documents or articles from the Internet, the text is typically extracted from the documents and articles either by extracting the text or removing images, tags, etc. to acquire raw text, such as shown in FIG. 4B, to which a text processor or a text analyzer may apply text processing algorithms. For example, the raw text data may be extracted through data mining or data mining may identify inferences in the text and extract such text required from the document to establish the inference for use by a text processing or reasoning processing algorithm. Typically, however, data mining of documents refers to extraction of text data for further analysis by a reasoning processing tool.

Once the information and data has been acquired and the text extracted from the information and data, a text profile is created for each text extraction. A filter using a relevance classification can be applied to all of the text extractions that have been acquired or retrieved. Using a relevance classification filter, text that is unrelated to the domain model may be filtered or removed from the text upon which the processing will be performed.

After relevance classification filtering of the extracted text, event classification filtering is applied to the remaining text. Event classification filtering looks for events of the type in the model or related to events in the model. The embodiment depicted in FIG. 4 uses two types of event classification methods: word-based event recognition text processing and structure-based event recognition text processing. Word-based event recognition text processing utilizes key words, and possibly key multi-word phrases, found in documents to recognize events. The embodiment of FIG. 4 utilizes two types of word-based event classification text processing methods: statistical (Bayesian) event classification and rule-based event classification. These two types of word-based event classification text processing methods are used in tandem in the embodiment of FIG. 4. The statistical or Bayesian event classification takes advantage of an initial classification of training documents where several documents are used for classifying each type of event to be recognized. Classification of training documents is typically performed manually or semi-automatically. The statistical or Bayesian event classification may also use a classification generation program to automatically produce a statistical Bayesian classifier program which reproduces event assignments for training documents by specifying a set of key words and weights for each type of event in the model. The set of key words is also used to improve the Boolean rules classification as described further below. If a key word appears in a document, in statistical or Bayesian event classification, a key word weight is added to the accumulated weight of the document for an associated event type, such as Accidents and Incidents as shown in FIG. 4C. If the total accumulated weight of the document exceeds a threshold, the associated event type may be assigned to the document. By way of example, FIG. 4C shows weights, also typically referred to as relevancy, of the document from FIGS. 4A and 4B to the particular domain concepts. For example, the document has a 1.000 weighting value to Runway Incursions, ATC Errors, and ATC Equipment Problems, but only a 0.643 weighting value to NTSB Recommendations. Although not required, weighting often can be interpreted as a percentage probability of relevancy, such as where 0.643 refers to the document having a 64.3% chance of being relevant to NTSB Recommendations. This associated event classification type assigned to a document is part of building the text profile for a document, as shown in FIG. 4C.

Rule-based event classification uses Boolean classification rules constructed from model event descriptions. Rule-based event classification also may use augmented vocabulary supplemented from a thesaurus of related terms and synonyms and may also use the Bayesian keyword set generated for statistical event classification.

Structure-based event recognition text processing uses complex natural language processing to recognize events. For example, structure-based event recognition text processing uses word order to detect whether a word is relevant to event recognition. This event recognition method is based on accurate parsing of text by a sophisticated parser and grammar. Using an accurate sentence parser, essential words and relations, or tuples, are extracted and used for event classification. Sentence parsing may be accomplished by using words that modify one another compiled by successive iterations of a large corpus of text, also referred to as a table of head collections.

As shown in FIG. 4, a common sense knowledge base, may supplement the creation of text profiles for documents and various aspects of text processing in general. For example, a knowledge base may be used for a vocabulary and/or grammar for analyzing documents. Further, a knowledge base related to a particular domain may be used with a causal domain model of the same or a related domain. From raw information and text, knowledge may be extracted or captured. Knowledge extraction generally is automated or semi-automated, identifying fragments of knowledge and text. For example, a general knowledge layer approach may be used to extract knowledge from the text by extracting abstract sentence patterns from raw text, and the abstract sentence patterns can be converted into formal logic representations for processing. Manual knowledge capture can be performed for example using a controlled language knowledge acquisition system that allows a user or domain expert to enter knowledge using a constrained subset of the English language. The entered knowledge can then be converted into a formal logic representation for processing to supplement the reasoning and text processing.

### C. EMBODIMENTS OF SYSTEMS OF THE PRESENT INVENTION

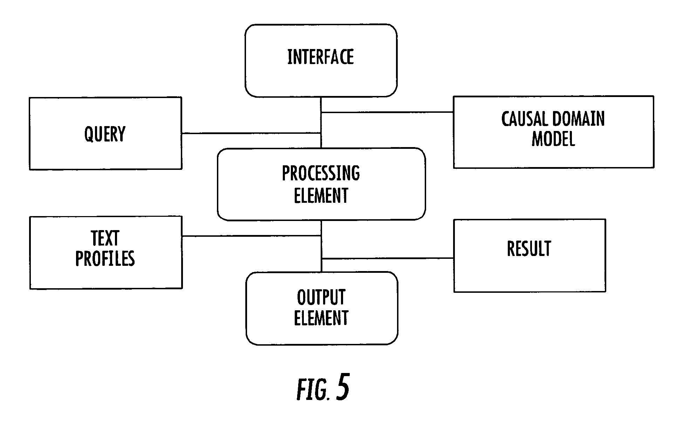

FIG. 5 is a diagram of a knowledge driven decision support system for combining cognitive causal models with reasoning and text processing for knowledge driven decision support that may be used for analyzing large amounts of textual data. An example embodiment of a knowledge driven decision support system may include an interface for receiving input relating to the creation of a causal domain model. The interface may be a graphical user interface or other type of interface that allows for receiving input by a domain expert or user. For example, an interface may allow for a user to input information via the Internet. In addition, an interface may allow input relating to the definition of a query.

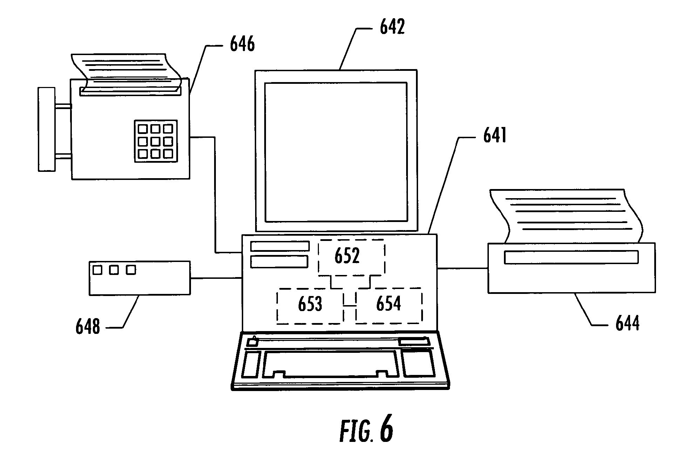

An embodiment of a knowledge driven decision support system for combining cognitive causal models with reasoning and text processing for knowledge driven decision support may also include a processing element, such as a processor **652,** memory **653,** and storage **654** of a computer system **641**, as shown in FIG. 6, for transforming a causal domain model into a mathematical formalization of the domain model, acquiring documents and processing text of the documents in accordance with the domain model to create text profiles, and performing reasoning analysis upon the text profiles in accordance with the domain model using the mathematical formalization of the domain model to derive a result. Examples of textual processing are described with reference to FIG. 4. Examples of reasoning analysis are described with reference to FIG. 3. A processing element typically operates under software control, where the software is stored in memory **653** or storage **654,** where all, or portions, of a corpus of documents is typically also stored.

A computer system can also include a display **642** for presenting information relative to performing and/or operating systems, methods, and computer programs for combining cognitive causal models with reasoning and text processing for knowledge driven decision support. The computer system **641** can further include a printer **644.** Also, the computer system **641** can include a means for locally or remotely transferring the information relative to performing and/or operating systems, methods, and computer programs for combining cognitive causal models with reasoning and text processing for knowledge driven decision support. For example, the computer can include a facsimile machine **646** for transmitting information to other facsimile machines, computers, or the like. Additionally, or alternatively, the computer can include a modem **648** to transfer information to other computers or the like. Further, the computer can include an interface to a network, such as a local area network (LAN), and/or a wide area network (WAN). For example, the computer can include an Ethernet Personal Computer Memory Card International Association (PCMCIA) card configured to transmit and receive information, wirelessly and via wireline, to and from a LAN, WAN, or the like.

Typically, computer program instructions may be loaded onto the computer **641** or other programmable apparatus to produce a machine, such that the instructions which execute on the computer or other programmable apparatus create means for implementing functions specified with respect to embodiments of systems, methods, and computer programs for combining cognitive causal models with reasoning and text processing for knowledge driven decision support, such as including a computer-useable medium having control logic stored therein for causing a processor to combine a cognitive causal model with reasoning and/or text processing for knowledge driven decision support. These computer program instructions may also be stored in a computer-readable memory, such as system memory **653,** that can direct a computer or other programmable apparatus to function in a particular manner, such that the instructions stored in the computer-readable memory produce an article of manufacture including instruction means which implement functions specified with respect to embodiments of systems, methods, and computer programs for combining cognitive causal models with reasoning and text processing for knowledge driven decision support. The computer program instructions may also be loaded onto the computer or other programmable apparatus to cause a series of operational steps to be performed on the computer **641** or other programmable apparatus to produce a computer implemented process such that the instructions which execute on the computer **641** or other programmable apparatus provide steps for implementing functions specified with respect to embodiments of systems, methods, and computer programs for combining cognitive causal models with reasoning and text processing for knowledge driven decision support.

As a result of the causal domain model derived from the interface and the processing element transforming the causal domain model and performing textual and reasoning processing upon text profiles, a knowledge driven decision support system for combining cognitive causal models with reasoning and text processing for knowledge driven decision support is capable of providing a result. The result may be provided by an output element, such as a display or monitor. However, an output element may also be embodied by such devices as printers, fax output, and other manners of output such as including email that may advantageously be used to update a user or domain expert at a subsequent time after a query has been established for a domain model. A result may be as simple as a text message, such as a text message indicating excessive occurrences of airline accidents and incidents in the particular time frame. However, results may be substantially more complex and involve various text and reasoning processing algorithms to provide knowledge driven decision support, such as performing hypothesis generation based upon a causal domain model and a query or set of implications of interest. Systems, methods, and computer programs for combining cognitive causal models with reasoning and text processing for knowledge driven decision support may be used in varying domains for various applications to derive various results.

By employing a system, method, and/or computer program for combining cognitive causal models with reasoning and text processing for knowledge driven decision support, a domain expert or user is provided the analytic capability to present queries to a domain model about the effect that perceived changes in domain concepts, detected from a collection of articles associated with the domain, may have on other concepts of interest. In other words, systems, methods, and computer programs for combining cognitive causal models with reasoning and text processing for knowledge driven decision support provide the ability to quantify the likelihood and extent of change that may be expected to occur in certain quantities of interest as a result of changes perceived in other quantities. A corresponding computer program or software tool may embody the previously described functions and aspects of systems, methods, and computer programs for combining cognitive causal models with reasoning and text processing for knowledge driven decision support. For example, a computer-useable medium can include control logic for performing a text processing algorithm or a reasoning processing algorithm, whereby such control logic is referred to as a text processing tool and a reasoning tool. Similarly, a computer-useable medium can include control logic for receiving input and providing output, referred to as an input tool and an output tool. A tool may include software, hardware, or a combination of software and hardware to perform the described functions and aspects of embodiments of systems, methods, and computer programs for combining cognitive causal models with reasoning and text processing for knowledge driven decision support. A tool may comprise a separate processing element or function with a primary processing element of a computer.

Systems, methods, and computer programs for combining cognitive causal models with reasoning and text processing for knowledge driven decision support may also provide a domain expert or user the ability to investigate results, trends, etc. by back propagating the text and reasoning processing to identify documents that influence the outcome of the processing applying a domain model. For instance, an embodiment of a system, method, or computer program for combining cognitive causal models with reasoning and text processing for knowledge driven decision support may allow a user to review relevant documents where relevant words and model concepts may be highlighted in the text. A user may be able to review the text profiles for relevant documents. Similarly, systems, methods, and computer programs for combining cognitive causal models with reasoning and text processing for knowledge driven decision support may display document set results organized by model concept to provide a domain expert the ability to review documents related to the domain and the application of the domain model.

An example embodiment of creating a causal domain model may begin when a domain expert identifies domain concepts and provides labels for these domain concepts. The domain expert may provide a text description for each domain concept, and further add keywords, additional description, and supplemental documents of importance for the domain concept. The domain expert may also establish quantitative or numerical parameters by which to evaluate a particular domain concept, such as identifying that airline profit is measured in hundreds of thousands of dollars or manufacturer safety budget is measured by a percentage of total manufacturer budget. The domain expert can build relationships between domain concepts and establish believed weights for the causal relationships that indicate strengths of indirect or direct influence between the domain concepts.

An example embodiment for using a causal domain model occurs when a domain expert establishes a query, such as the probability of change of public concern about airline safety, or establishes as a threshold for indicating a possible event or need for change, such as government oversight, demand for flying, or manufacturer profit falling too low below an established threshold. From all of the information available about the domain model and related query, a mathematical formalization may be applied to the domain model to derive a formalized model. Based on the formalized domain model, text and reasoning processing may be applied to a corpus of text that may have been harvested from the Internet by a web crawler. Using the text processing, reasoning processing, formalized domain model, and query, an embodiment of a system, method, or computer program for combining cognitive causal models with reasoning and text processing for knowledge driven decision support can provide knowledge driven decision support information, such as information provided in the form of a query result or trend alert.

### II. PREDICTION OF THE LIKELIHOOD, THE EXTENT, AND/OR TIME OF AN EVENT OR CHANGE OF OCCURRENCE USING A CAUSAL DOMAIN MODEL.

As mentioned above, the present invention uses causal domain models as describe above and as described in U.S. Patent Application Serial No. 11/070,452 to predict the likelihood, extent, and/or time of an event or change of occurrence. The present invention provides for a specific expansion and application of systems, methods, and computer programs for combining cognitive causal models with reasoning and text processing for knowledge driven decision support.

An event occurrence can be a discrete event or a specific change perceived in a concept of interest. As used herein, the term "event occurrence" is inclusive of a change occurrence, such that a specific change may be defined as an event. And a change occurrence, such as a change of an event occurrence, may be in either a positive or negative direction.

To use a causal domain model, a user defines a query, such as in the form of a question regarding a discrete event, a specific change perceived in a concept or interest, or how current and/or past events and/or change in one or more (source) concepts will affect future events and changes of other (destination) concepts.

Embodiments of the present invention provide frameworks in which to answer queries related to prediction of the likelihood, extent, and/or time of an event or change of occurrence. The prediction of likelihood of an event or change of occurrence relates to the prediction of the occurrence of a future event or changes given knowledge of current and/or past events and observed changes occurring in quantities of interest. The prediction of the magnitude of an event or change of occurrence relates to the prediction of the magnitude of the occurrence of future changes given knowledge of current and/or past events and observed changes occurring in quantities of interest. The prediction of the time of an event or change of occurrence refers to the time when an event is expected to occur in the future or when a specific change is expected to occur or be perceived as occurring.

As described above, the ability to generate such predictions, in typical embodiments, relies upon the reduction of an unconstrained, uncomputable causal domain model. Thus, prior to performing reasoning algorithms, an unconstrained causal domain model is converted into a formalization by performing mathematical formalization on the unconstrained causal domain model. The mathematical formalization may be performed manually, semi-automatically, or automatically. By transforming the unconstrained causal domain model into a mathematical formalization, the formalized model can support processing of the domain using mathematical reasoning algorithms. When converting the unconstrained causal model to a formalization, minimizing information loss may aid in retaining the causal domain model as intended by the domain expert. Based on information input by a domain expert or user creating an unconstrained causal domain model, different causal domain models can be constructed to formalize the domain concepts and causal relationships between domain concepts. For example, a formalized causal domain model may be constructed utilizing model-based reasoning, case-based reasoning, Bayesian networks, neural networks, fuzzy logic, expert systems, and like inference algorithms. And the formalized (computable) causal domain model may be created based on the required information related to a query of a user, such as to create a computable submodel of the domain which is tailored specifically to the query of interest. The computable submodel may then be used to derive quantitative information to provide predictions of the likelihood, the extent, and/or time of an event or change of occurrence.

Example embodiments of the present invention are described below with reference to use of Bayesian networks, dynamic Bayesian networks (DBN), and continuous time Bayesian networks (CTBN). Other alternative embodiments may take advantage of modeling structures and reasoning processing of neural networks, fuzzy logic, expert systems, and like inference algorithms. For example, to avoid the tradeoff in the reduction of information content to gain a computationally quantifiable estimate for Bayesian networks, dynamic Bayesian networks, or continuous time Bayesian networks, other embodiments of the present invention may answer similar and/or other quantitative questions using mechanisms of other modeling structures which are chosen and/or used for reasoning processing which may require less or different reduction of, or not require reduction of, the unconstrained causal domain model.

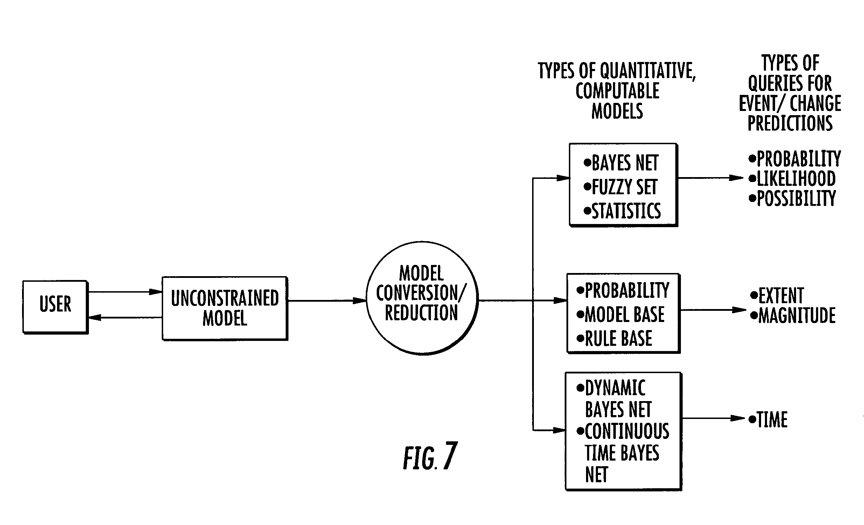

One example embodiment of the present invention is to reduce an unconstrained causal domain model to a Bayesian network to predict the likelihood and extent of an event or change occurrence and to a dynamic Bayesian network to predict the time of the event or change occurrence. FIG. 7 is a schematic block diagram of a process to convert an unconstrained causal domain model for predicting the likelihood, the extent, and/or time of an event or change of occurrence of an embodiment of the present invention. FIG. 7 indicates various example modeling structures and reasoning processing inference algorithms that may be used for prediction of various quantitative information in accordance with an embodiment of the present invention. Depending upon the nature of a user's query of interest, different conversion and/or reduction algorithms may be implemented. For example, Bayesian Networks, fuzzy logic, and statistics may typically be used to predict likelihood of an event or change occurrence; probability, model based, and rule based inference algorithms may typically be used to predict extent of an event or change occurrence; and dynamic Bayesian networks or continuous time Bayesian networks may typically be used to predict the time of an event or change occurrence.

Provide below are descriptions of an example embodiment of the present invention for using a causal domain model to predict the likelihood of an event or change of occurrence; an example embodiment of the present invention for using a causal domain model to predict the extent of an event or change of occurrence; and an example embodiment of the present invention for using a causal domain model to predict the time of an event or change of occurrence.

### A. LIKELIHOOD PREDICTION

An example embodiment of the present invention which uses a causal domain model to predict the likelihood of an event or change occurrence may use a Bayesian network as the model structure and reasoning processing inference algorithm to estimate a joint probability distribution model over the variables of the query (problem). The computed submodel may be defined as a directed acyclic graph (DAG) displaying the probabilistic dependencies between the variables of the query and associating conditional probability tables to those dependencies. After creating the computable submodel of the joint distribution, it is possible to query the model using conditional probability statements.

Although the entire unconstrained model (a directed graph) of the domain of interest can, itself, be mapped into a Bayesian network by minimizing the information loss from the various possible combinations of graph edges that can be removed to eliminate cycles in the graph, such an operation may be computationally intensive, or not feasible, if the unconstrained model is large. To address such a problem, the cycle elimination may be done only to a fragment (a subgraph) of the entire model which is specific to a given query. Thus, the resulting computable submodel (of the subgraph) will retain the ability to predict the likelihood of an event or change occurrence by updating the probability of (destination) parameters of interest representing events and changes, given currently observed events and changes.

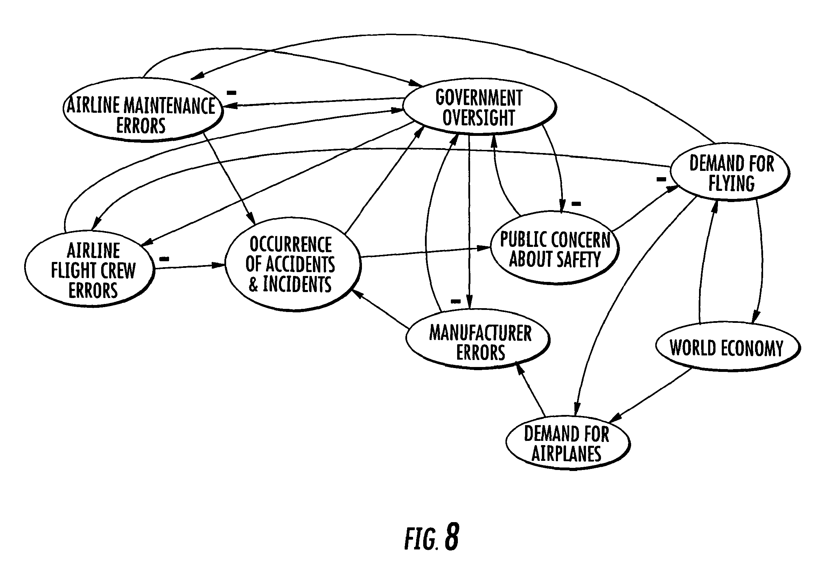

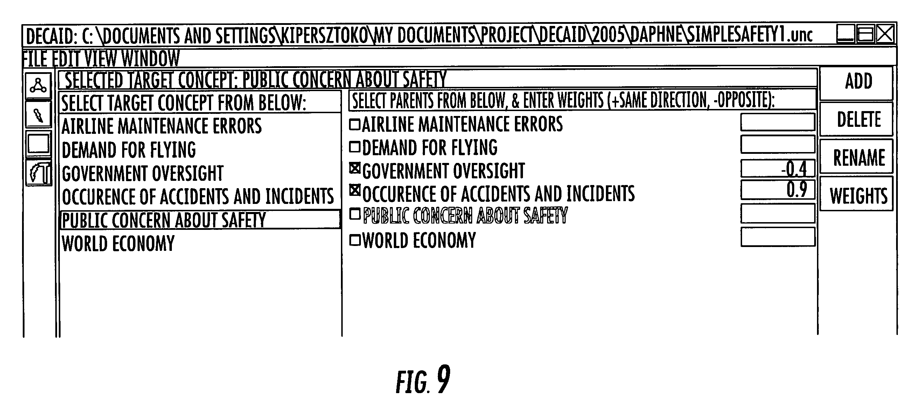

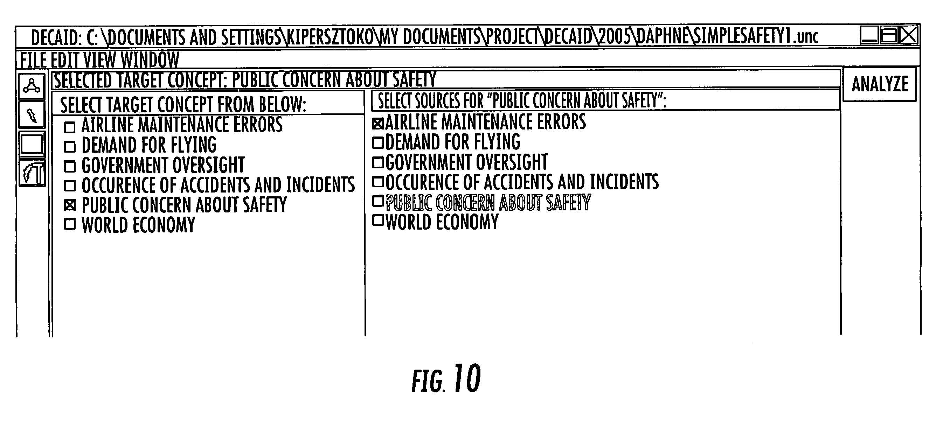

FIG. 8 is a pictorial representation of an unconstrained causal domain model which is a directed graph of a simplified model for Airline Safety. The parameters (concepts) are labeled in the nodes, and the edges show the dependencies between the parameters. The parameters shown in the embodiment of FIG. 8 describe state transition quantities that represent change. For example, the node "Demand for flying" can increase or decrease. Although generally described above with respect to creating a causal domain model, FIG. 9 shows how the parent-child relations in the unconstrained model of FIG. 8 may be defined by selecting the child concept, shown in the left window pane of FIG. 9, and then selecting the parent(s) with their associated weights of belief, shown in the right window pane of FIG. 9. An alternative user input may permit the domain expert or user defining a query to build and/or modify the unconstrained causal domain model through interaction with a pictorial representation of the unconstrained model, rather than using separate data input graphical user interfaces, such as shown in FIG. 9.

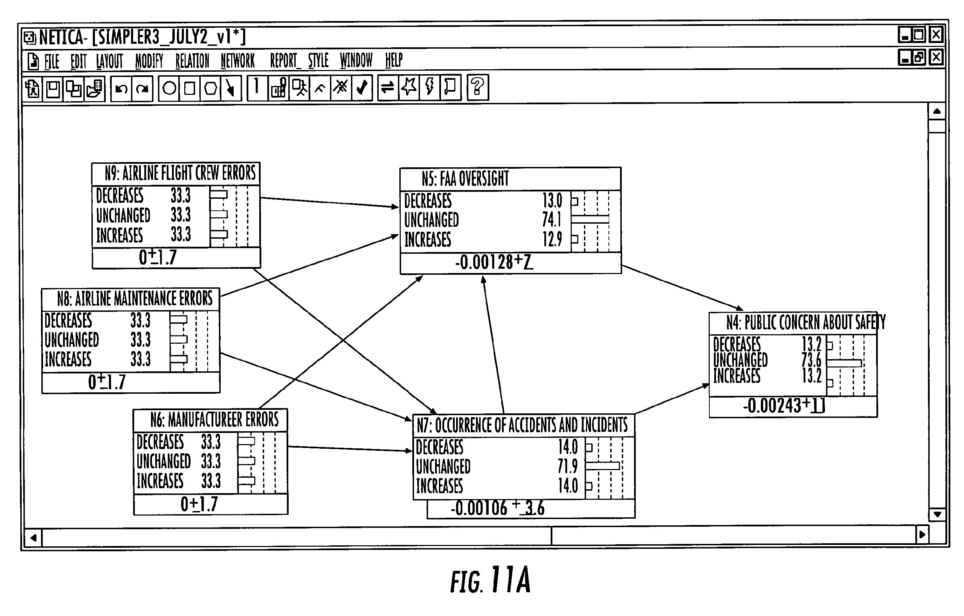

Once the unconstrained model is built, a user can directly query the causal domain model to provide quantitative answers to questions of interest, such as different questions related to the likelihood of an event or change occurrence. For any query, depending upon how an unconstrained causal domain model was originally constructed and the particular query, additional information, such as relationship weighting or time intervals, may be requested of a user to further define the domain model or the query to allow the system to answer the query. FIG. 10 shows an example of a user defining a query about how observed changes in the source concept "airline maintenance errors," selected in the right window pane, will affect the target concept "public concern about safety," selected in the left window pane.

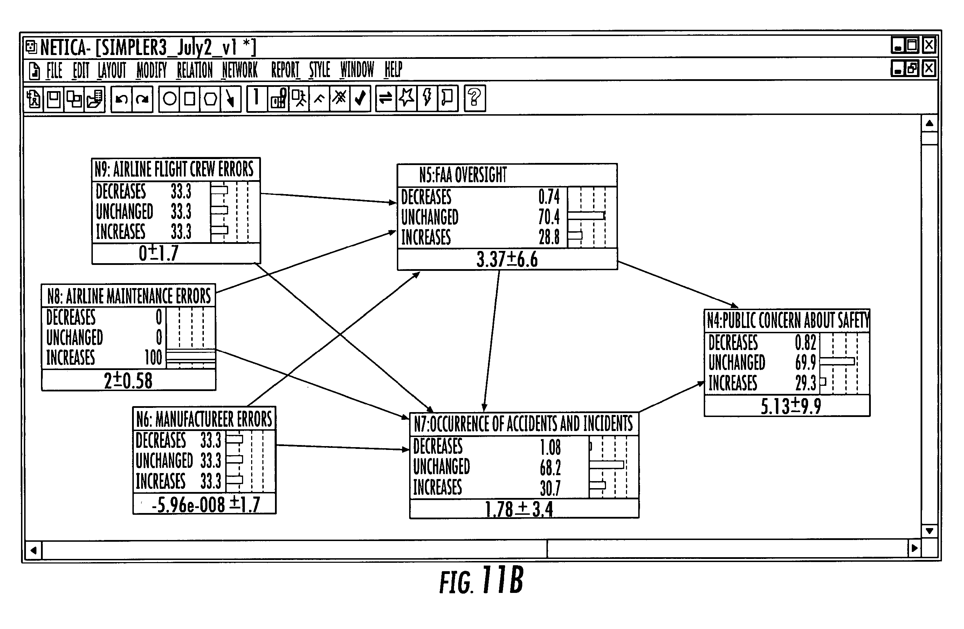

Once the query is defined, or otherwise established and input, a user may submit the query, such as by selecting an "Analyze" button, as shown in the upper right corner of FIG. 10. From the query, an embodiment of a system of the present invention may identify the fragment of the unconstrained model pertinent to the query (i.e., the subgraph), and create a resulting Bayesian network which is a directed acyclic graph that can provide the answer to the query, as shown in FIG. 11A. The directed acyclic graph shown in FIG. 11A, may be generated, for example, using a commercially available software package such as Netica™ from Norsys Software Corporation of Vancouver, British Columbia. The Bayesian network that results from the query computes the probabilities of predicted changes in light of currently observed changes. In FIG. 11A, the parent concepts "Airline flight crew errors," "Airline maintenance errors," and "Manufacturer errors" are each associated with equal probabilities of increasing, decreasing, and remaining unchanged for determination of the resulting likelihood of change of the target concept "Public concern about safety." In FIG. 11B, the system has observed evidence of increase in the incidence of the parent (source) concept "Airline maintenance errors." Accordingly, the example model predicts that given an increase in the occurrence of "Airline maintenance errors," it is expected with 29% probability that there will be an increase of the target concept "Public concern about safety," sometime in the future.

### B. EXTENT PREDICTION

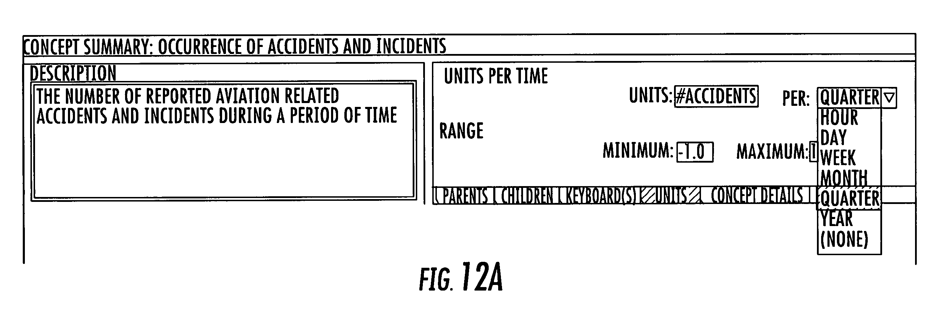

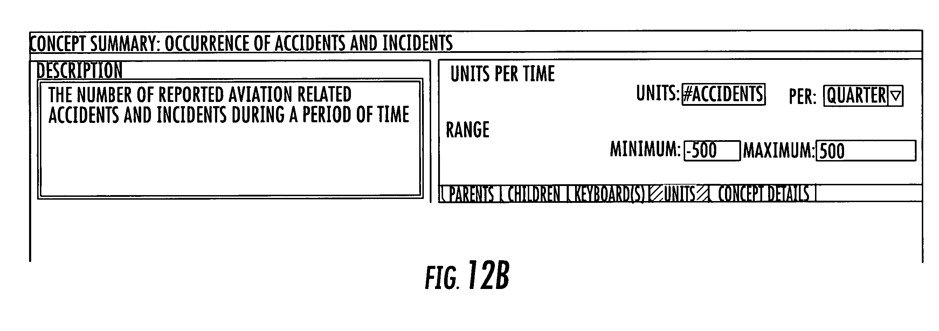

In addition to being able to predict the likelihood of an event or change occurrence, a user may also want to determine a prediction of the expected extent (or magnitude) of an event or change occurrence. Such a query typically will require that additional parameters be added to a causal domain model, either during creation of the model or when a user attempts to define a query related to the extent of an event or change occurrence. During creating of a causal domain model, a domain expert may only input weights of causal belief related to each edge (parent-child relation). To make a prediction of an extent (or magnitude) of an event or change occurrence, numeric quantities need to define a dimension for each concept in the units of the quantity whose extent or magnitude a user wants to predict. In addition, each dimensional unit per known period of time may need to be normalized and numerical ranges of change need to be defined that a domain expert or user can associate with each concept quantity in the defined dimensional units. For example, for the concept "Airline manufacturing errors," a user can define dimensions of "Number of detected errors per quarter" and then attach order of magnitude ranges of the magnitudes of expected changes, such as from -500 to +500. FIG. 12A shows an example graphical user interface for permitting a user to input dimensional units and a choice of time period. FIG. 12B shows an example graphical user interface for permitting a user to input the magnitude of range changes.

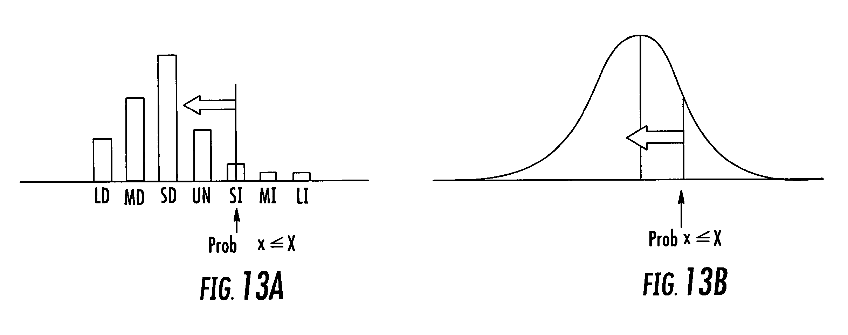

Once the concepts of the particular query have defined magnitude of change ranges with dimensional units, the probability estimates updated by the Bayesian network may now be estimated over the space of the magnitude of change values. Estimates of magnitude of change for each concept may then be determined with a level of confidence dictated by a probability distribution function. A probability distribution function may be continuous or discrete, such as the discrete distribution shown in FIG. 13A and the continuous distribution shown in FIG. 13B. From the quantitative information associated with the concepts related to a particular query, an embodiment of the present invention can provide the predicted magnitude of an event or change occurrence.

### C. TIME PREDICTION

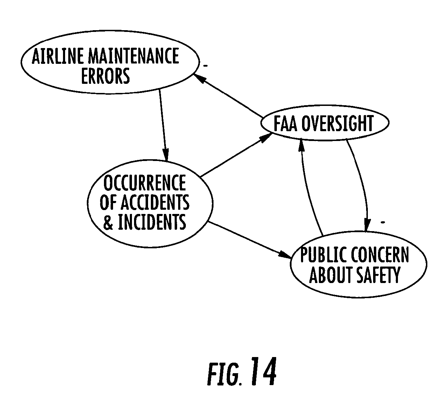

Users may also want to use a causal domain model to predict time of events or change occurrences. As with other embodiments of the present invention, many model structures and reasoning processing inference algorithms may be used for time prediction. Provided below are descriptions of two ways for predicting time using causal domain models related to Bayesian network methodology. With respect to predicting time using causal domain models, FIG. 14 is a fragment of an example Bayesian network. In the fragment, an increase in the "airline maintenance errors" node contributes to an increase in the "occurrence of accidents and incidents" node which, in turn, contributes to an increase in the "public concern about safety" node and also contributes to an increase in the "FAA oversight" node. There are two feedback cycles in the fragment. In one feedback cycle, an increase in the "FAA oversight" node will contribute to a decrease in the "airline maintenance errors" node. In the other feedback cycle, when the "public concern about safety" node increases, the "FAA oversight" node increases which, in turn, contributes to a decrease in the "airline maintenance errors" node. Although an axis of time is implicit, but not explicit, in this Bayesian network fragment, an implicit time axis is not sufficient for time predictions. However, time prediction is possible using a dynamic Bayesian network (DBN) or continuous time Bayesian network (CTBN) as described further below.

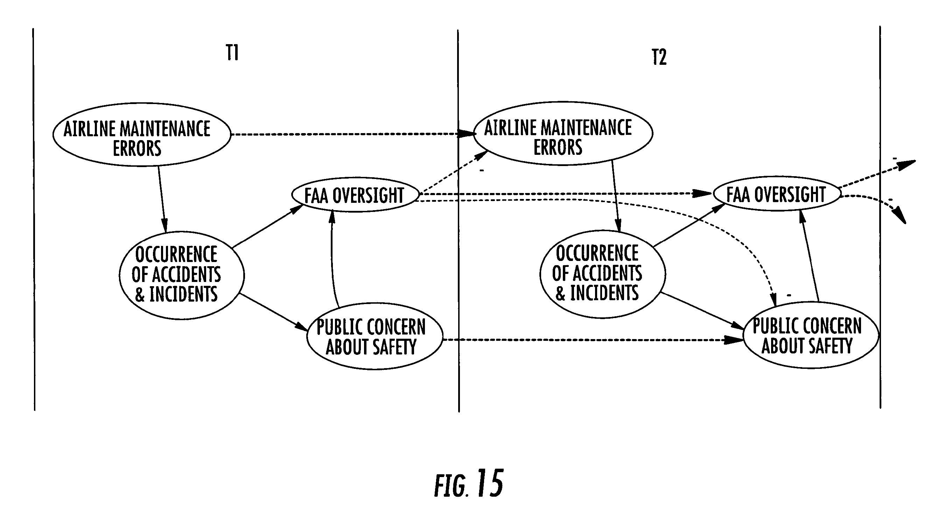

One way to predict time is to extend the Bayesian network belief update algorithm with a dynamic Bayesian network (DBN). To predict the time of events and change occurrences using a dynamic Bayesian network, a domain expert or user has to provide a time interval in which the Bayesian network is repeated. The explicit modeling of time can be accomplished by defining a time axis by slicing time into repeated intervals, as shown in FIG. 15. When sliced into repeated time intervals where cycles can be broken, a Bayesian network is allowed to evolve over time since each cycle returns to its starting point at a different interval of time. Some nodes in the network are dependent upon the state of the node in the previous interval or intervals, such as the "airline maintenance errors," "FAA oversight," and "public concern about safety" nodes. Each of these relations is modeled explicitly. Two consecutive time intervals T1 and T2 for a fragment of a dynamic Bayesian network for a causal domain model are shown in FIG. 15. The two cycles T1 and T2 in the causal domain model have been broken, and repeated nodes are unique since they now represent the nodes at a different interval of time. For example, the "FAA oversight" node in time T1 feeds back into the "airline maintenance errors" node in time T2, so the feedback takes affect over a predetermined interval of time. In FIG. 15, thin, light dashed arrows represent broken feedback cycles, and heavy, bold dashed arrows represent nodes that are dependent on their state from a previous time interval. For example, the "airline maintenance errors" node during T1 may affect the rate of the "airline maintenance errors" node of T2, independently from the "FAA oversight" node of T1. Dynamic Bayesian networks are sampled at a rate corresponding to the fastest changes that are expected to occur. The faster the changes to observe, the more intervals and larger resulting network. With larger networks, the performance of the belief update algorithm may be diminished because the belief update algorithm depends exponentially on the size of the network.

Another way to predict time is to use a continuous time Bayesian network (CTBN), which does not require that a domain expert or user set a time interval and thereby parse time into a sequence of equal intervals as required for dynamic Bayesian networks. However, continuous time Bayesian networks, which are based on homogeneous Markov processes that define the finite-state and dynamic evolution of a variable, assume discrete states for each node in the network that by definition are mutually exclusive. For example, in FIG. 14, the "FAA oversight" node may be in one of three possible states, i.e., decrease, unchanged, or increase. A continuous time Bayesian network allows for any number of transitions associated with a variable to evolve in parallel, even when some variables may evolve more rapidly than others. To query a continuous time Bayesian network for the temporal, dynamic behavior of the network when certain events occur, a domain expert or user will need to create a state transition matrix, also referred to as a state transition intensity matrix, between parent and child nodes that reflect the average time that it takes for the effect of the parent node to be transmitted as changes in the state of the child node. A state transition matrix defines, for a variable in any given state, the probability of a variable leaving the state and the probability of the state transitioning to any of the other possible states. As with additional information required for other prediction query results, an embodiment of a system or computer program of the present invention may be adapted to request the user entering a time query to provide the additional parameters required to build a state transition matrix for the domain model, or submodel. One advantage of using continuous time Bayesian networks is that continuous time Bayesian networks allow for feedback loops to be present in a network. An additional advantage of using continuous time Bayesian networks is that continuous time Bayesian networks may be mapped to a Bayesian network structure to obtain likelihood prediction results, in addition to time prediction results.

Accordingly, embodiments of the present invention provide systems, methods, and computer programs for predicting the likelihood, the extent, and/or the time of an event or change of occurrence using a combination of cognitive causal models with reasoning and text processing for knowledge driven decision support. Additional information may be required for particular queries, such as to predict the extent or time of events and change occurrences. An example knowledge driven decision support system for the prediction of information may include a domain model defining at least two domain concepts and at least one causal relationship between the domain concepts and a reasoning tool for employing the domain model by using at least two of the domain concepts and at least one of the causal relationships of the domain concepts to analyze at least one document for determining a result representing the prediction of an event occurrence, wherein at least one of the causal relationships being used is between two of the domain concepts being used.

The inventions are not to be limited to the specifically disclosed embodiments, and modifications and other embodiments are intended to be included within the scope of the appended claims. Although specific terms are employed herein, they are used in a generic and descriptive sense only and not for purposes of limitation.

## Claims

1. A system for assisting knowledge driven decision support by the prediction of information, comprising:
a domain building tool for creating a domain model defining at least two domain concepts and at least one causal relationship between the domain concepts;
a reasoning tool adapted for employing the domain model by using at least two of the domain concepts and at least one of the causal relationships of the domain concepts for determining a result representing the prediction of an event occurrence, wherein at least one of the causal relationships being used is between two of the domain concepts being used, wherein the reasoning tool comprises a transformation routine capable of transforming the domain model into a mathematical formalization of the domain model; and
a processing element capable of communicating with the transformation routine for transforming the domain model into a mathematical formalization of the domain model, and communicating with the reasoning tool for performing reasoning analysis in accordance with the domain model using the mathematical formalization of the domain model to derive a predictive result.

2. The system of Claim 1, wherein the reasoning tool is a likelihood reasoning tool and the result represents the prediction of the likelihood of an event occurrence.

3. The system of Claim 1, wherein the reasoning tool is an extent reasoning tool and the result represents the prediction of the extent of an event occurrence.

4. The system of Claim 1, wherein the reasoning tool is a time reasoning tool and the result represents the prediction of the time of an event occurrence.

5. The system of Claim 1, wherein the transformation routine is further capable of reducing the domain model to a submodel.

6. The system of Claim 1, wherein the reasoning tool comprises a predictive analysis inference algorithm.

7. The system of Claim 1, wherein the reasoning tool comprises a Bayesian network belief update algorithm.

8. The system of Claim 1, wherein the reasoning tool comprises a dynamic Bayesian network belief update algorithm.

9. The system of Claim 1, wherein the reasoning tool comprises a continuous time Bayesian network belief update algorithm.

10. A method of predicting information, comprising:
providing a domain model representing domain concepts and causal relationships between the domain concepts;
receiving a query for resulting predictive information using the domain model;
transforming the domain model into a formalism according to the query; and
performing reasoning analysis according to the formalism and the query, wherein the domain model supports prediction of the reasoning analysis in accordance with the query to produce the resulting predictive information.

11. The method of Claim 10, further comprising the step of:
creating the domain model by defining domain concepts and causal relationships, wherein at least one of a domain concept and a causal relationship are used to formalize the domain model, and perform reasoning analysis.

12. The method of Claim 10, wherein the step of performing reasoning analysis comprises performing a predictive analysis inference algorithm.

13. The method of Claim 10, wherein the step of performing reasoning analysis comprises performing a predictive analysis inference algorithm and wherein the resulting predictive information is representative of at least one of the predictive information selected from the group of the likelihood of an event occurrence, the extent of an event occurrence, and the time of an event occurrence.

14. The method of Claim 10, wherein the step of performing reasoning analysis comprises performing a Bayesian network belief update algorithm.

15. The method of Claim 10, wherein the step of performing reasoning analysis comprises performing a dynamic Bayesian network belief update algorithm.

16. The method of Claim 10, wherein the step of performing reasoning analysis comprises performing a continuous time Bayesian network belief update algorithm.

17. A computer program comprising a computer-useable medium having control logic stored therein for predicting information using a domain model, the control logic comprising:
a first code adapted to provide the domain model representing domain concepts and causal relationships between the domain concepts;
a second code adapted to receive a query for resulting predictive information using the domain model;
a third code adapted to transform the domain model into a formalism according to the query; and
a fourth code adapted to perform reasoning analysis according to the formalism and the query, wherein the domain model supports prediction of the reasoning analysis in accordance with the query to produce the resulting predictive information.

18. The computer program of Claim 17, wherein the control logic further comprises:
a fifth code adapted to create the domain model by defining domain concepts and causal relationships, wherein at least one of a domain concept and a causal relationship are used to formalize the domain model, and perform reasoning analysis.

19. The computer program of Claim 17, wherein the fourth code of the control logic further comprises:
a sixth code adapted to perform a predictive analysis inference algorithm and wherein the resulting predictive information is representative of at least one of the predictive information selected from the group of the likelihood of an event occurrence, the extent of an event occurrence, and the time of an event occurrence.
